# EUROPEAN PATENT APPLICATION

(11) **EP 4 485 649 A2**
(43) Date of publication of application: **01.01.2025**
(21) Application number: 24178038.6
(22) Date of filing: 24.05.2024
(51) Int. Cl.: H01M 50/204, H01M 50/244, H01M 50/251, H01M 50/258, H01M 50/262, H01M 50/271, H01M 50/291

(54) **BATTERY CABINET AND ENERGY STORAGE CONTAINER INCLUDING THE BATTERY CABINET**

(30) Priority: 27.05.2023 CN 202321317780 U; 07.06.2023 CN 202321439347 U; 14.07.2023 CN 202321860065 U; 22.09.2023 CN 202322601426 U; 31.10.2023 CN 202322953209 U; 19.12.2023 CN 202323475206 U
(71) Applicant: REPT BATTERO Energy Co., Ltd., 325000 Wenzhou Zhejiang (CN); Shanghai Ruipu Energy Co., Ltd., Shanghai 201206 (CN)
(72) Inventor: CAO, Hui, WENZHOU (CN); LIU, Si, Pudong New District (CN); YU, Chen, Pudong New District (CN); ZHAO, Qi, Pudong New District (CN); DAI, Hua, WENZHOU (CN); ZHONG, Hongtao, WENZHOU (CN); HE, Bilei, WENZHOU (CN); YU, Shangmiao, WENZHOU (CN)
(74) Representative: Potter Clarkson

(57) **Abstract**

The present disclosure provides a battery cabinet of a battery box and an energy storage container including the battery cabinet. The battery cabinet comprises a battery rack, the battery rack comprises a mounting bracket (2) and a number of mounting zones located within the mounting bracket (2), each mounting zone is provided with a cluster rack (3) on both sides; the battery box (1) is provided with mounting guide parts (11) on both sides of its width direction respectively, two mounting guide parts (11) are configured to be slidably mounted on the bottom wall (31) of two cluster racks (3) along the mounting direction, the cluster rack (3) is further provided with a first sloping surface (33), an acute angle is arranged between the first sloping surface (33) and the bottom wall (31), and an opening direction of the acute angle towards an entry direction of the battery box (1), the mounting guide part (11) is provided with a first inclined surface (12) for touching and fitting against the first sloping surface (33), a locking member is also provided for pressing the first inclined surface (12) tightly against the first sloping surface (33) along the mounting direction.

## Description

### Technical Field

The present disclosure belongs to the field of energy storage technology and relates to a battery cabinet and an energy storage container including the battery cabinet.

### Background

Battery box is a box body used to mount batteries, usually made of iron material. In energy storage system, battery cabinet is usually used to fixedly mount multiple battery boxes to provide powerful electricity. With the development and application of the energy storage system, the demand for cost reduction of energy storage equipment using battery cabinet is becoming increasingly apparent, one solution is to increase the number of batteries inside a single battery box in the battery cabinet and reduce the cost of the corresponding components by cost-sharing. However, with the increase of battery box power, the requirement for the fixed strength of the battery box fixed in the battery cabinet is also increasing, and it is also necessary to improve the mounting convenience of the battery box in the battery cabinet.

CN209786027U discloses a fixing structure of a battery box, which realizes the pressing and fitting in a height direction H by means of a bottom wall of a support unit and a position limiting member located within the support unit. However, there are certain defects, i.e., in order to ensure the mounting stability between the battery box and the support unit, and to ensure the stability of position limitation, it is necessary for the position limiting member to provide a strong compressing force on the battery box in the height direction, at this time, the mount of the battery box in an X direction requires a large force to slide in or slide out. Therefore, there may be a contradiction between the stability of position limitation and the convenience of pushing in and pushing out.

On the other hand, the energy storage container has a wide range of applications in the energy field, with the functions of coping with peak power demand, supporting microgrid operation, and providing emergency backup energy, etc. Moreover, due to its modularized design, the energy storage container has good portability and flexibility, and can be rapidly deployed and moved. The common energy storage container consists of a battery compartment, a power conversion compartment, a control and monitoring compartment and a fire compartment, wherein the battery compartment is the core of the whole system. Once the battery in the battery compartment fails, it must be repaired in the first time to avoid further damage. In practice, due to the properties and characteristics of the battery, it is prone to generate uncertainties, which in turn affects the efficiency of repair, resulting in additional time costs and waste of human resources. In order to reduce transportation costs and quickly respond to the malfunction and repair of the energy storage container, it will also choose to build a preparation warehouse nearby, but this will additionally bring a series of additional expenses such as construction costs and inventory management, etc. The present disclosure also proposes an energy storage container to solve these problems.

### Summary

The present disclosure provides a battery cabinet to solve the above technical problems, which comprises a battery rack, the battery rack comprises a mounting bracket and a number of mounting zones located within the mounting bracket, each mounting zone is provided with a cluster rack on both sides, the cluster rack comprises a side wall and a bottom wall extending along a mounting direction, the cluster rack further comprises an opening end for a battery box to enter; wherein the battery box is provided with mounting guide parts on both sides of its width direction respectively, two of the mounting guide parts are configured to be slidably mounted on the bottom wall of two cluster racks along the mounting direction, the cluster rack is further provided with a first sloping surface, an acute angle is arranged between the first sloping surface and the bottom wall and an opening direction of the acute angle towards an entry direction of the battery box, the mounting guide part is provided with a first inclined surface for touching and fitting against the first sloping surface; a locking member is also provided between the battery box and the battery rack for pressing the first inclined surface tightly against the first sloping surface along the mounting direction.

The present disclosure also provides an energy storage container to solve the above technical problems, which comprises a container body and the battery cabinet as described above; wherein the container body is provided with a first mounting zone and a second mounting zone disposed side by side in a third direction, a battery rack in the battery cabinet comprises a first partition structure and a second partition structure, the first partition structure is provided inside the first mounting zone and divides the first mounting zone into a battery compartment and a preparation compartment, the second partition structure is provided inside the second mounting zone and divides the second mounting zone into multiple functional compartments, the battery compartment is provided between the preparation compartment and the second mounting zone, and the battery box is configured to be provided within the battery compartment and the preparation compartment.

A battery cabinet according to the present disclosure is provided a battery rack with the cluster rack set in the mounting zone, by setting mounting guide parts with first inclined surfaces on both sides of the battery box, the mounting guide part is slidably mounted in the cluster rack, the first inclined surface is touching and fitting to the first sloping surface of the cluster rack, and the mounting guide part is locked and fixed in the cluster rack by the locking member, thereby achieving the mounting and fixation of the battery box in the mounting zone. This structural design not only ensures that the battery box can be firmly mounted on the battery rack, but also makes the mounting of the battery box more labor-saving and convenient, effectively improving the mounting convenience of the battery box.

According to the energy storage container of the present disclosure, by providing the preparation compartment with a spare battery box placed inside the energy storage container, when the battery inside the battery compartment needs to be replaced due to malfunction or other reasons, the spare battery box located inside the preparation compartment can be taken out at this time, and the battery inside the battery compartment that needs to be replaced can be replaced. Since the preparation compartment is set adjacent to the battery compartment, the transportation time of the battery box can be saved, and the battery box can be replaced in time; and the preparation compartment is set in the box body of the energy storage container, there is no need to build a preparation warehouse around the energy storage container, which saves construction costs.

### Brief Description of the Drawings

The features, performance of the present disclosure are further described by the following embodiments and their accompanying drawings.
FIG. 1 is a schematic diagram of the overall structure of a battery cabinet including a battery box of an embodiment of the present disclosure;
FIG. 2 is a schematic diagram of the structure of a battery box in an embodiment of the present disclosure;
FIG. 3 is a schematic diagram of the structure of a cluster rack in an embodiment of the present disclosure;
FIG. 4 is a front view of another structure of a cluster rack in an embodiment of the present disclosure;
FIG. 5 is a front view of another structure of a cluster rack in an embodiment of the present disclosure;
FIG. 6 is a schematic diagram of the completed assembly of a battery box and a cluster rack in an embodiment of the present disclosure;
FIG. 7 is a partially enlarged schematic diagram of region A1 in FIG. 6;
FIG. 8 is a schematic diagram of the overall structure of a battery box in an embodiment of the present disclosure;
FIG. 9 is a cross-sectional view of C1-C1 in FIG. 8;
FIG. 10 is a partially enlarged schematic diagram of region A2 in FIG. 9;
FIG. 11 is a cross-sectional view of C2-C2 in FIG. 8;
FIG. 12 is a partially enlarged schematic diagram of region A3 in FIG. 11;
FIG. 13 is a partially enlarged schematic diagram of region A4 in FIG. 12;
FIG. 14 is a top view of a battery pack case of an embodiment of the present disclosure;
FIG. 15 is an exploded view of a battery pack of an embodiment of the present disclosure;
FIG. 16 is a partial cross-sectional view of a case body of a battery pack of an embodiment of the present disclosure;
FIG. 17 is a schematic diagram of the structure of a case body of a battery pack of an embodiment of the present disclosure;
FIG. 18 is a schematic diagram of a three-dimensional structure of a battery pack of an embodiment of the present disclosure;
FIG. 19 is a partial cross-sectional view of a case body of a battery pack of an embodiment of the present disclosure;
FIG. 20 is a partial cross-sectional view of a case body of a battery pack of an embodiment of the present disclosure;
FIG. 21 is a partial cross-sectional view of a case body of a battery pack of an embodiment of the present disclosure;
FIG. 22 is a partial cross-sectional view of a case body of a battery pack of an embodiment of the present disclosure;
FIG. 23 is a partial cross-sectional view of a case body of a battery pack of an embodiment of the present disclosure;
FIG. 24 is a structural schematic diagram of an embodiment in which a guide rail is provided on a mounting bracket of the present application;
FIG. 25 is a front view of a container body of an energy storage container of an embodiment of the present disclosure;
FIG. 26 is a three-dimensional view of a container body of an energy storage container of an embodiment of the present disclosure;

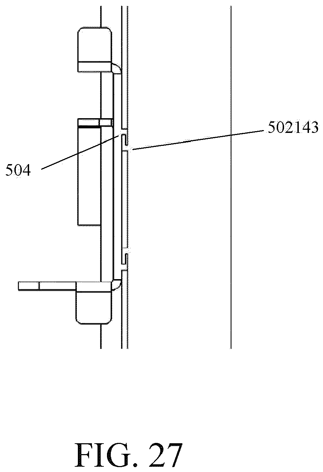

FIG. 27 is a schematic diagram of a second cluster rack and a partition fitting of an energy storage container in an embodiment of the present application;
FIG. 28 is a three-dimensional view of a container body of an energy storage container of an embodiment of the present disclosure;
FIG. 29 is a partially enlarged schematic diagram of region A5 in FIG. 28;
FIG. 30 is a schematic diagram of a low-voltage wiring harness and a high-voltage wiring harness in an energy storage container of an embodiment of the present disclosure;
FIG. 31 is a schematic diagram of the structure of an energy storage container frame of an energy storage container of an embodiment of the present disclosure;
FIG. 32 is a schematic diagram of the structure of an energy storage container frame of an energy storage container of an embodiment of the present disclosure;
FIG. 33 is a partially enlarged schematic diagram of region A6 in FIG. 32;
FIG. 34 is a side view of the structure of an energy storage container frame of an energy storage container of an embodiment of the present disclosure.

### Preferred Embodiment of the Present Disclosure

The technical solutions in the embodiments of the present disclosure will be clearly described below in conjunction with the accompanying drawings in the embodiments of the present disclosure, and it is clear that the described embodiments are a part of the embodiments of the present disclosure and not all of the embodiments. Based on the embodiments in the present disclosure, all other embodiments obtained by the person skilled in the art are within the scope of protection of the present disclosure.

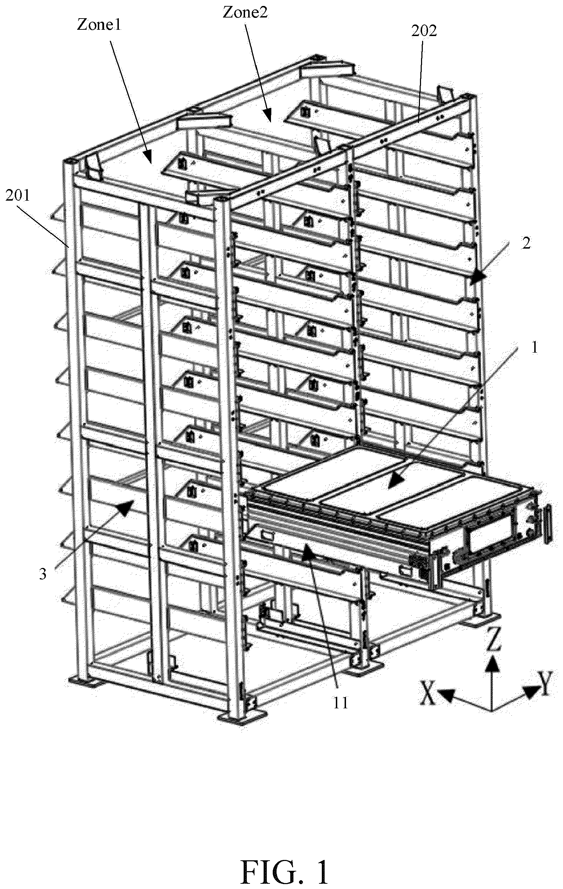

Referring to FIG. 1, the present embodiment provides a battery cabinet including a battery rack, the battery rack comprises a mounting bracket 2 and a plurality of mounting zones located within the mounting bracket 2. The battery cabinet is used to provide multiple battery boxes 1. The FIG. 1 shows a positional state of the battery cabinet including the battery box 1 in actual use, wherein the spatial position is represented by an XYZ coordinate system, wherein the Z-axis represents a vertical direction and the XY plane is a horizontal plane. As shown in FIG. 1, the mounting bracket 2 may comprise a plurality of vertical brackets 201 extending along a vertical direction Z and a plurality of horizontal brackets 202 extending along a horizontal direction. The mounting zone may be divided according to actual needs. As shown in FIG. 1, two mounting zones Zone1, Zone2 are arranged side by side on the left and right, and cluster racks 3 are provided on both sides in each mounting zone, and the two cluster racks 3 are set opposite to each other for jointly setting one battery box 1.

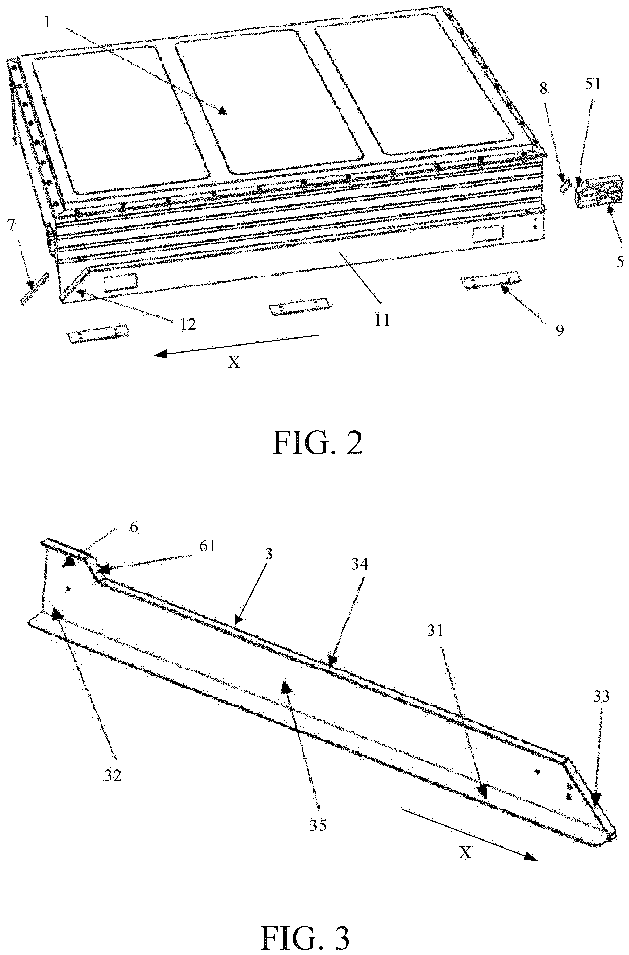

As shown in FIG. 3, the cluster rack 3 comprises a side wall 35 and a bottom wall 31 extending along a mounting direction X, and the cluster rack 3 further comprises an opening end 32 for the battery box 1 to be mounted into. It is to be noted that, as shown in conjunction with FIG. 1 and FIG. 3, when mounting the battery box 1 to the battery rack, the direction indicated by the arrow along the X-axis is the mounting direction, i.e., the battery box 1 enters into the space between the two cluster racks 3 from the opening end 32 along the direction indicated by the X-axis and is slidably mounted to the two cluster racks 3 inwardly along the side walls 35 and the bottom walls 31.

As shown in FIG. 1 and FIG. 2, the battery box 1 is roughly a rectangular shape, which has a certain width along the direction Y. Therefore, the direction Y is referred to as the width direction, and the battery box 1 is provided with mounting guide parts 11 on both sides of the width direction Y. In other words, the two mounting guide parts 11 on both sides extend along the mounting direction X. Referring to FIG. 1 to FIG. 3, the two mounting guide parts 11 of the battery box 1 can be slidably mounted on the bottom walls 31 of the two cluster racks 3 along the mounting direction X. The cluster rack 3 is further provided with a first sloping surface 33, an acute angle is arranged between the first sloping surface 33 and the bottom wall 31, and the opening direction of the acute angle is directed towards the entry direction of the battery box 1, the mounting guide part 11 is provided with a first inclined surface 12 for touching and fitting against the first sloping surface 33. As shown in FIG. 2, the mounting guide part 11 may be a block structure or a frame structure made of bent sheet metal, which is fixed to both sides of the battery box 1 in the width direction Y by welding, bonding, or screw connection, etc., and is used for mounting guidance of the battery box 1 on the battery rack.

As shown in FIG. 2, an acute angle is also arranged between the first inclined surface 12 and the bottom surface of the mounting guide part 11, in some embodiments, the acute angle is the same as the angle of the acute angle that arranged between the first sloping surface 33 and the bottom wall 31. As shown in FIG. 2 and FIG. 3, the meaning of the first inclined surface 12 is touching and fitting to the first sloping surface 33 is that when the battery box 1 has completed its setting on the battery rack and the first inclined surface 12 is in full or partial touch with the first sloping surface 33. The width of the first inclined surface 12 may be greater than, equal to, or less than the width of the first sloping surface 33.

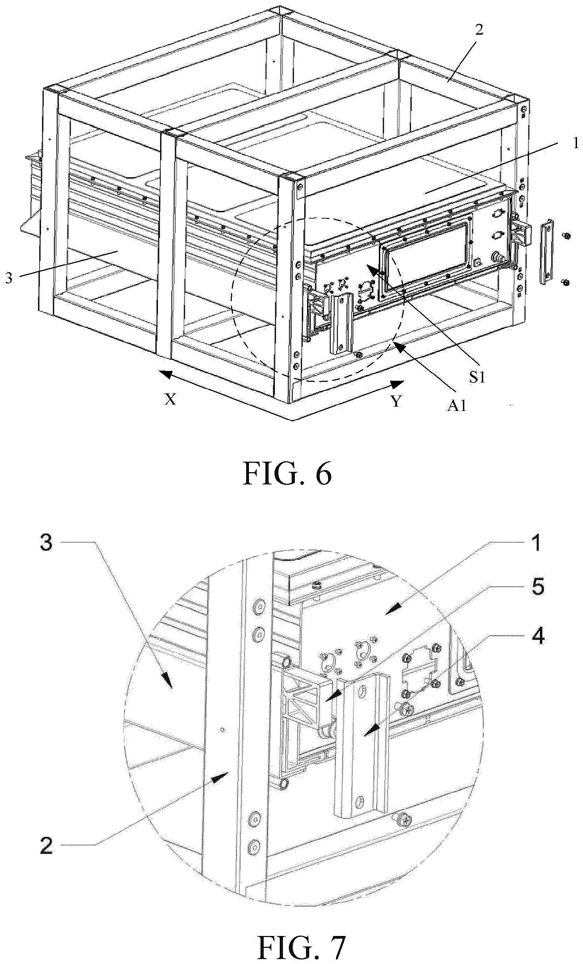

FIG. 6 shows a state when the battery box 1 has been provided on the battery rack. In order to fix the position of the battery box 1, a locking member is also provided between the battery box 1 and the battery rack for pressing the first inclined surface 12 tightly against the first sloping surface 33 along the mounting direction X.

As shown in FIG. 2, FIG. 3, and FIG. 6, the side wall 35 of the cluster rack 3 limits the position of the battery box 1 in the width direction Y; the bottom wall 31 of the cluster rack 3 limits the bottom position of the battery box 1 in the height direction Z; an angle formed between the first sloping surface 33 and the bottom wall 31 towards the entry direction of the battery box, and the end (i.e., the first inclined surface 12) of the mounting guide part 11 is adapted therewith. When the locking member is locked, the end of the mounting guide part 11 with the first inclined surface 12 is tightly against the angle on the cluster rack 3, and the stronger the locking force, the better the effect of the tight fit; i.e., the stable fastening effect of the battery box in the height direction Z and the mounting direction X can be achieved by the locking member, the bottom wall 31 of the cluster rack 3, and the first inclined surface 12, and when the mounting guide part 11 is mounted into the cluster rack, the resistance is small, making it easy to push in or push out.

The locking member is specifically described herein. In some embodiments, as shown in FIG. 7, the locking member comprises a stopper 4, the stopper 4 is mounted at an opening end 32 of the cluster rack 3, and the stopper 4 is touching against the battery box 1 in the mounting direction X. Preferably, the stopper 4 may be a separate member, and one end of the stopper 4 (i.e., the end of the stopper 4 shown in FIG. 7 which is close to the mounting bracket 2) may be detachably mounted and fixed to the cluster rack 3 or the battery rack, and when the stopper 4 is mounted, the another end of the stopper 4 (i.e., the end of the stopper 4 shown in FIG. 7 which is away from the mounting bracket 2) is position limited to a trailing end of the battery box 1 (i.e., the trailing end S 1 of the battery box 1 shown in FIG. 6) in the mounting direction X to avoid the battery box from sliding out along the mounting direction X.

In addition, one end of the stopper 4 may also be fixedly mounted to the trailing end S 1 of the battery box 1, and another end of the stopper 4 is detachably connected to the cluster rack 3 or the battery rack.

Further, the stopper 4 and the cluster rack 3 can be connected by bolts. The cluster rack 3 may be provided with the internally threaded sleeve, as shown in FIG. 7, and the through holes are also provided on the cluster rack 3 to enable fastening there between by bolts or screws.

The specific mounting method is as follows: the mounting guide part 11 of the battery box 1 is inserted from the opening end 32 of the cluster rack 3, and the battery box 1 is entering by sliding along the bottom wall 31 of the cluster rack 3, when the first inclined surface 12 of the mounting guide part 11 is touching and fitting against the first sloping surface 33, the battery box 1 stops sliding; and then the locking member is mounted and set on the opening end 32 of the cluster rack 3, which serves as effect of position limiting and locking for the mounting of the battery box 1.

With the battery cabinet of the present disclosure, the battery box 1 can not only be firmly mounted on the battery rack, but also the mounting of the battery box 1 is more labor-saving and convenient, which effectively improves mounting convenience of the battery box 1.

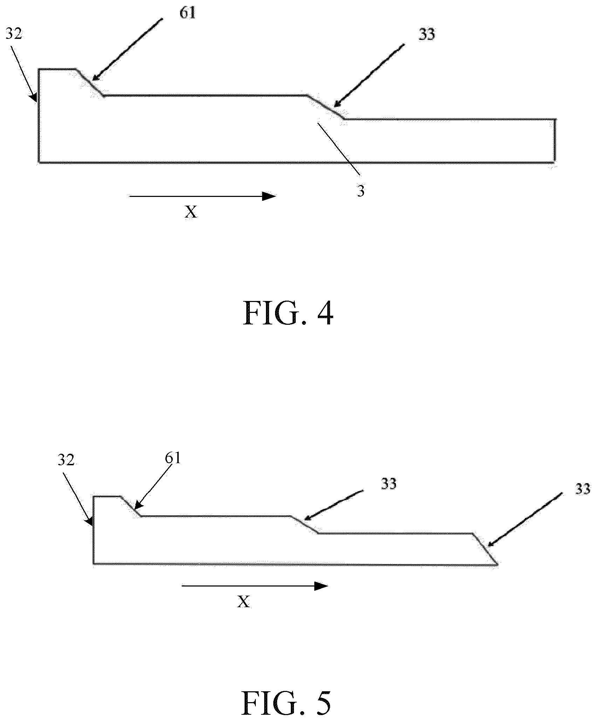

In some embodiments, as shown in FIG. 3, the first sloping surface 33 is provided at the trailing end of the cluster rack 3 (i.e., the end that is away from the opening end 32 of the cluster rack 3); in other embodiments, as shown in FIG. 4, the first sloping surface 33 is provided in the middle of the cluster rack 3, and the number of the first sloping surface 33 in the middle may be one or more; in yet other embodiments, as shown in FIG. 5, the first sloping surface 33 is provided in both the middle and the trailing end of the cluster rack 3; without enumerating herein, it is sufficient to limit the battery pack in both directions by the provision of the first sloping surface 33. If the position of the first sloping surface 33 on the cluster rack 3 is different, the first inclined surface 12 on the corresponding mounting guide part 11 should be adjusted accordingly. It is particularly noted that the mounting guide part 11 may be a structure of unibody or a structure in which a plurality of structural members are connected by welding or other connecting methods, without limitation herein.

As shown in FIG. 2, in some embodiments, the battery cabinet of the present disclosure further comprises the plug 5, the plug 5 is provided above the mounting guide part 11 for pressing and fitting against the mounting guide part 11 in the height direction Z. Accordingly, in conjunction with FIG. 3, in some embodiments, the cluster rack 3 is provided with the slot 6 for fitting with the plug 5.

As shown in FIG. 2, FIG. 3, and FIG. 7, the plug 5 may be a separate structural member, after the mounting guide part 11 has entered into the cluster rack 3, the plug 5 is then mounted, the upper part of the plug 5 touching against the top surface of the slot 6, so as to enable the lower part of the plug 5 to be realized downwardly pressing and fitting against the mounting guide part 11 in the height direction Z, which increases the mounting stability of the mounting guide part 11 with the cluster rack 3.

The cluster rack 3 can be a sheet metal part, the bottom wall 31 and the first sloping surface 33 can be bent by the sheet metal, and the top of the cluster rack 3 also comprises a bent top wall 34, and the opening height of the opening end 32 of the cluster rack 3 is larger, which is convenient for the alignment and push-in of the mounting guide part 11, in addition to being able to form the slot 6, which is convenient for use with the plug; in addition, the first sloping surface 33 can be a separate sheet metal part, which is fixed to the side wall 35 of the cluster rack 3 by welding or other methods.

Further, as shown in FIG. 3, the slot 6 is provided with a second sloping surface 61, an acute angle is also arranged between the second sloping surface 61 and the bottom wall 31, and the opening direction of the acute angle also towards the entry direction of the battery box 1. As shown in FIG. 2, one end (the end towards the mounting direction X) of the plug 5 is provided with a second inclined surface 51 for touching and fitting against the second sloping surface 61, and the other end (the end towards outward) of the plug 5 is provided for touching and fitting against the stopper 4. In some embodiments, the second sloping surface 61 and the second inclined surface 51 are parallel to each other. In some embodiments, the first sloping surface 33, the second sloping surface 61, the first inclined surface 12, and the second inclined surface 51 are all in parallel.

In this embodiment, when the mounting guide part 11 of the battery box 1 is provided in the cluster rack 3, the plug 5 is mounted and inserted into the slot 6, and the second inclined surface 51 of the plug 5 is touching and fitting against the second sloping surface 61 of the slot 6, and when tightening is performed in the mounting direction X by the stopper 4, the plug 5 exerts a pressing force on the mounting guide part 11 along the height direction Z, so that the portion of the mounting guide part 11 at the opening end 32 is tightly pressed and fixed by the plug 5, thereby strengthening the mounting firmness of the mounting guide part 11 on the cluster rack 3 and improving the mounting firmness of the battery box 1 in the mounting zone.

As shown in FIG. 5, in some embodiments, the first sloping surface 33 is located at the trailing end (i.e., the other end of the cluster rack 3 away from the opening end 32) of the cluster rack 3, and the second sloping surface 61 is located at the forward end (i.e., near the opening end 32) of the cluster rack 3.

Preferably, the first sloping surface 33 and the second sloping surface 61 are respectively located at the front end and the rear end of the battery box 1 in the mounting direction X, so that both the trailing end (corresponding to the trailing end of the cluster rack 3) and the front end (corresponding to the front end of the cluster rack 3) of the mounting guide part 11 are tightly pressed and fixed at the same time, so as to improve the mounting firmness of the mounting guide part 11 inside the cluster rack 3; moreover, the fitting position of the first sloping surface 33 and the mounting guide part 11 can also be located in the middle of the battery box, or the fitting position of the second sloping surface 61 and the mounting guide part 11 is located in the middle of the battery box, and the person skilled in the art may arbitrarily set the position and the number of the first sloping surface 33 and the second sloping surface 61 under the inspiration of the present disclosure, all of which are within the scope disclosed in the present disclosure.

As shown in FIG. 2, in some embodiments, the battery cabinet of the present disclosure further comprises a first buffer layer 7 and/or a second buffer layer 8, the first buffer layer 7 is set between the first sloping surface 33 and the first inclined surface 12, and the second buffer layer 8 is set between the second sloping surface 61 and the second inclined surface 51. In this embodiment, the first buffer layer 7 can be made of silicone, which has a certain compressibility, so that when the first inclined surface 12 of the mounting guide part 11 is touching and fitting to the first sloping surface 33, the first buffer layer 7 between the first sloping surface 33 and the first inclined surface 12 will be pressed, which will increase the mounting stability, and at the same time, after the mounting is completed, in the actual use, it can also play a role in absorbing the vibration and achieve the effect of buffering. Similarly, the second buffer layer 8 can also be made of silicone with a certain compressibility to increase the mounting stability, and at the same time, after the mounting is completed, in actual use, it can also play a role in absorbing vibration to achieve the effect of buffering. By setting the first buffer layer 7 and/or the second buffer layer 8, both ends of the mounting guide part 11 and the cluster rack 3 are tightly pressed and fixed to ensure the positioning of the battery box in all directions, and to improve the mounting firmness of the battery box.

As shown in FIG. 3, in some embodiments, the cluster rack 3 comprises a top wall 34 opposite to the bottom wall 31 along the height direction Z. In this embodiment, the top of the mounting guide part 11 in the height direction Z can be position limited by providing the top wall 34, and the top wall 34 can be mounted with the two ends connected to the lower end of the second sloping surface 61 and the upper end of the first sloping surface 33, respectively, and the top wall 34 may also be set locally in the middle of the mounting guide part 11, which in practice mainly serves to limit the mounting guide part 11 in the height direction Z. Preferably, the two ends of the top wall 34 are connected to the lower end of the second sloping surface 61 and the upper end of the first sloping surface 33, respectively, and the top wall 34 and the second sloping surface 61 and the first sloping surface 33 are an integrated structure, which can enhance the structural stability of the cluster rack 3 while playing the role of position limiting.

As shown in FIG. 2, in some embodiments, the battery cabinet of the present disclosure further comprises at least one slider 9, the slider 9 is provided at the bottom of the mounting guide part 11. As shown in FIG. 2, in this embodiment, three sliders 9 with low coefficient of friction are provided at the bottom of the mounting guide part 11 of the battery cabinet 1, and the sliders 9 can be fixed to the mounting guide part 11 by means of welding, screws, or other methods. The bottom of the mounting guide part 11 of the battery box 1 is touching and fitting to the cluster rack 3 by the sliders 9, and the sliders 9 are utilized to enable the mounting guide part 11 of the battery box 1 to be more conveniently and slidably mounted on the bottom wall 31 of the cluster rack 3, which improves mounting convenience. At the same time, the slider 9 has a lower coefficient of friction, and the mounting guide part 11 produces less wear and tear on the cluster rack 3 when sliding on the bottom wall 31 of the cluster rack 3, improving the durability of the cluster rack 3 and the mounting guide part 11.

The above battery box 1 is used to provide the battery inside thereof, and the battery may include a plurality of battery sets, each battery set comprises a plurality of battery cells. Currently, the battery box is made of iron material, and the molding method is stamping resistance welding, and the thickness of the plate is 0.8 mm or 1 mm. In order to improve the mass energy density of the battery pack, the material is changed from iron material to lightweight material such as aluminum alloy, etc. In the related technology, the aluminum alloy box body adopts a frame structure, the box body has a rectangular shape of the frame border, which makes the frame border occupy a large space in the battery pack, and in order to maintain the shape of the frame border, it is necessary to use aluminum alloy around the frame border, and at the same time, there are multiple shins inside the frame border, which ultimately makes the frame border use a large number of aluminum alloy materials, and does not really achieve lightweight, and the box body has a high cost. In order to solve these problems, the present disclosure makes improvements to the battery box 1 as previously described, which can solve the problems of the related technology in which the frame border is not lightweight and the cost of the box body is elevated.

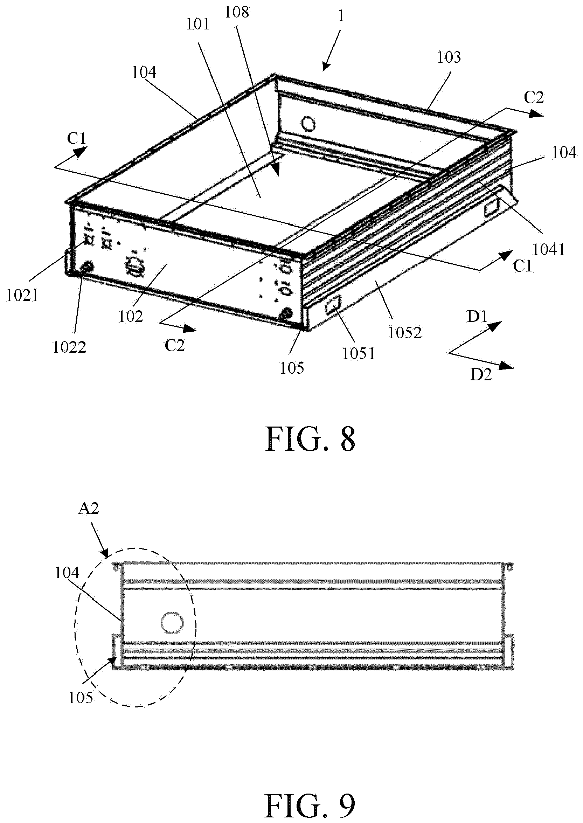

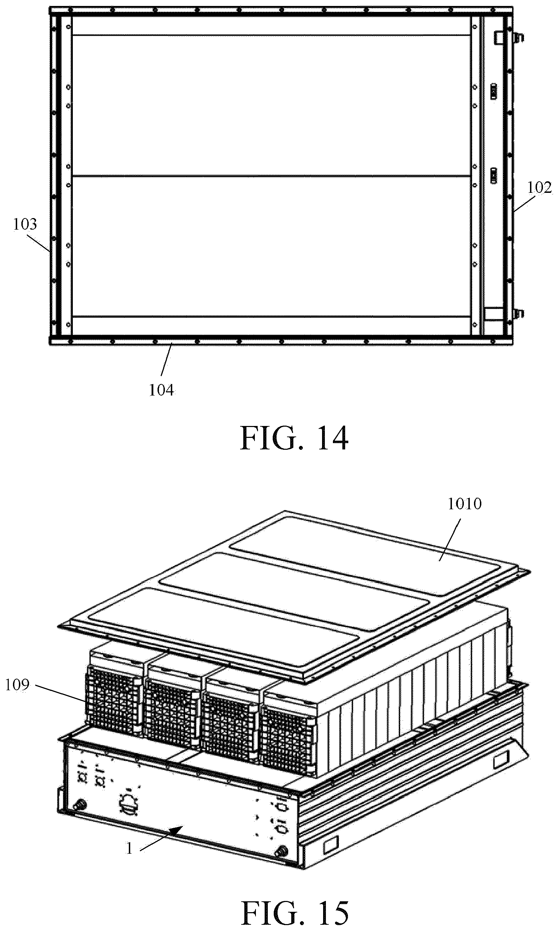

Referring to FIG. 15, there is shown a battery pack provided by the present disclosure, which may include the battery set 109 and the battery box 1 described above, referred to as the battery pack case, the battery set 109 is located in the battery pack case. Referring to FIG. 8, the battery pack case may include the bottom plate 101 and the surround plate, wherein the surround plate comprises a front surround plate 102 adopting a thin plate structure, a rear surround plate 103 adopting a thin plate structure, and two side surround plates 104 adopting a thin plate structure, wherein the front surround plate 102 and the rear surround plate 103 are arranged opposite to each other, the two side surround plates 104 are arranged opposite to each other, and each side surround plate 104 connects the front surround plate 102 and the rear surround plate 103 and connected around the bottom plate 101 to form a first cavity 108 for housing the battery set 109 (refer to FIG. 15), a plurality of protrusions 1041 extending along the first direction D1 are provided on the wall surface of one side of each side surround plate 104 that is back away from the first cavity 108. Wherein the first direction D1 is the direction of the front surround plate 102 pointing towards the rear surround plate 103.

In this embodiment, the surround plate is circumferentially surrounded along the bottom plate 101 to form a first cavity 108 housing the battery set 109, the copper bars, and the low-voltage sampling harness; the materials of the front surround plate 102, the rear surround plate 103, and each side surround plate 104 independently include the aluminum alloy material or the magnesium alloy material.

Wherein the thin plate structure indicates that the thickness of the plate is in a relatively thin range and has a lighter weight. In the present disclosure, the thickness B of the front surround plate 102 is preferably in a range of 1.2~5mm, the thickness A of the rear plate 103 is preferably in a range of 1~5mm; and the thickness C of each side surround plate 104 is preferably in a range of 1.5~5mm, and the weight of the box body is again reduced by adopting the lightweight thin plate structure, and the use of the box body material is reduced, so as to achieve the purpose of reducing the cost of the box body.

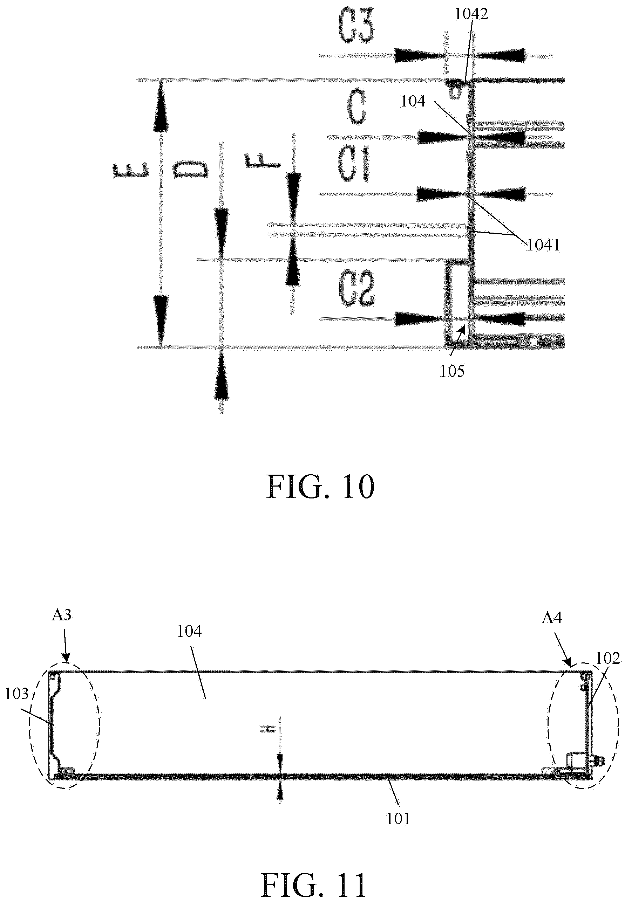

Referring to FIG. 8, in some embodiments, each side surround plate 104 of the box body is designed with a plurality of protrusions 1041, such as the three stripe protrusions 1041 extending along the first direction D1 shown in FIG. 8. As shown in FIG. 10, the relationship between the thickness C1 of each protrusion 1041 and the thickness C of each side surround plate 104 is preferably: 0.3C≤C1≤3C, and the width F of each protrusion 1041 (the width F of each protrusion 1041 is the size of each protrusion 1041 in the height direction of the box body, and the height direction of the box body is the direction of the side surround plate 104 from one end connected to the bottom plate 101 to one end of the side surround plate 104 away from the bottom plate 101) is preferably: 0.5C≤F≤4C, and when the sizes of the protrusion 1041 are in the above ranges, it is possible to increase the strength of the side surround plate 104 and prevent deformation of the side surround plate 104.

As shown in FIG. 11, the thickness H of the bottom plate 101 is preferably in the range of 5~20 mm, and a plurality of cavities are designed within the bottom plate 101 so as to reduce the weight of the bottom plate 101.

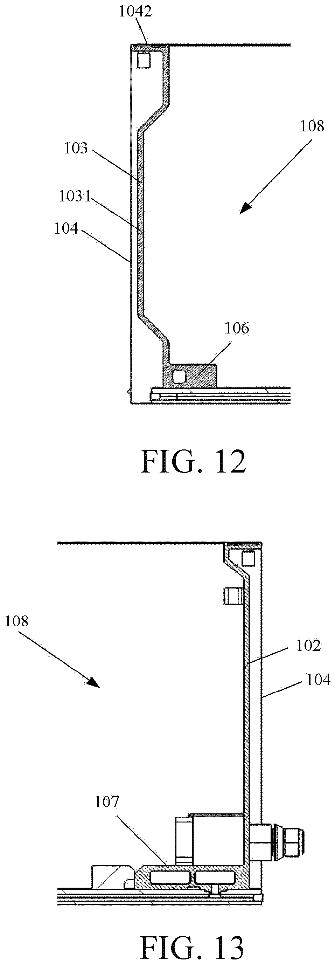

As shown in conjunction with FIG. 8 and FIG. 15, in some embodiments, the battery pack case further comprises a top cover 1010, the top cover 1010 is arranged opposite to the bottom plate 101 and closes over the surround plate to seal the first cavity 108. As shown in FIG. 12, the top of each side surround plate 104 (the top of the side surround plate 104 is one side of the side surround plate 104 which is back away from the bottom plate 101) is provided with a sealing part 1042 for connecting to the top cover 1010, and the sealing part 1042 is connected to the top of the side surround plate 104 and extends along the thickness direction of the side surround plate 104 towards one side which is back away from the first cavity 108. In this embodiment, by designing the sealing part 1042 at the top of the side surround plate 104 for connection between the battery box body and the top cover 1010, the sealing of the battery pack is ensured.

In some embodiments, the top of the front surround plate 102 (the top of the front surround plate 102 is one side of the front surround plate 102 which is back away from the bottom plate 101) is provided with a first sealing part (not shown in the figures) for connecting to the top cover 1010, the first sealing part is connected to the top of the front surround plate 102 and extends along the thickness direction of the front surround plate 102 to one side which is back away from the first cavity 108, i.e., outwardly towards the cavity.

In some embodiments, the top of the rear surround plate 103 (the top of the rear surround plate 103 is one side of the rear surround plate 103 back away from the bottom plate 101) is provided with a second sealing part (not shown) for connecting to the top cover 1010, the second sealing part is connected to the top of the rear surround plate 103 and extends along the thickness direction of the rear surround plate 103 to one side back away from the first cavity 108, i.e., outwardly towards the cavity.

As shown in FIG. 10, preferably, the width C3 of the sealing part 1042 is not greater than the width C2 of the second cavity 105.

Preferably, the width range of the first sealing part is 15~40mm; the width range of the second sealing part is 15~40mm; wherein the width of the first sealing part is the size of the first sealing part in the first direction D1, and the width of the second sealing part is the size of the second sealing part in the first direction D 1.

Preferably, the width C3 of the sealing part 1042 is in the range of 15~40mm, the width C2 of the second cavity 105 is in the range of 15~40mm, and the relationship between the width C2 and the width C3 of the sealing part 1042 is C2 AC3, so that the edge of the sealing part 1042 does not exceed the edge of the second cavity 105, and when the outside of the box body is subjected to external impact, the second cavity 105 will withstand the impact force, so as to protect the sealing part 1042 of the side surround plate 104 and improve the sealing safety of the battery pack.

Referring to FIG. 8 and FIG. 9, in some embodiments, the lower part of each side surround plate 104 (the lower part of the side surround plate 104 is one side of the side surround plate 104 near the bottom plate 101) is further provided with the reinforcing plate 1052 on a wall surface of one side away from the first cavity 108, the side surround plates 104 and the reinforcing plates 1052 enclose a second cavity 105, and the reinforcing plate 1052 is provided with the lifting hole 1051. In the present embodiment, by providing the reinforcing plate 1052 in the lower part of the side surround plate 104 and opening at least 2 lifting holes 1051 on the side of the reinforcing plate 1052, there is no need to open the lifting hole 1051 on the side surround plate 104, which ensures the strength of the side surround plate 104 and avoids deformation.

Referring to FIG. 11 and FIG. 12, further, at least one second protrusion 1031 is provided on a wall surface of one side of the rear surround plate 103 away from the first cavity 108, and all of the second protrusions 1031 have a third projection on a surface of the fitted top cover 1010 of the second sealing part along the height direction of the battery pack case, and the third projection is located within the surface of the fitted top cover 1010 of the second sealing part. In this embodiment, by providing the second protrusion 1031 on the rear surround plate 103 toward the exterior of the box body, the strength of the rear surround plate 103 is increased and the space below the second sealing part of the box body is enabled to be utilized, so that on the basis of satisfying the strength of the rear surround plate 103, the volume inside the battery pack is increased to provide mounting space for the copper bars or sampling wiring harnesses inside the battery pack and to enhance the utilization of the space inside the box body.

Referring to FIG. 10, preferably, the height D of the second cavity 105 is less than the height E of the side surround plate 104, and 0.05E≤D≤0.6E, so as to minimize the height of the second cavity 105 as much as possible on the basis of reserving a position for the lifting hole 1051 and to reduce the material used on the side surround plate 104, thereby further reducing the weight of the box body and reducing the cost.

Referring to FIG. 12 and FIG. 13, preferably, the front surround plate 102 has a first projection along the second direction D2 (shown with reference to FIG. 8) on a wall surface of one side of any one of the side surround plates 104 near the first cavity 108, the first projection is located within a wall surface of one side of the side surround plate 104 near the first cavity 108; and the rear surround plate 103 has a second projection along the second direction D2 on a wall surface of one side of any one of the side surround plates 104 near the first cavity 108, the second projection is located within a wall surface of one side of the side surround plate 104 near the first cavity 108, wherein the second direction D2 is a direction in which one of the side surround plates 104 points toward the other side surround plate 104; i.e., the plate surfaces of the front surround plate 102 and the rear surround plate 103 do not extend beyond the end surfaces of the side surround plate 104 (two ends of the side surround plate 104 protrude from the front surround plate 102 and the rear surround plate 103). In this embodiment, the front surround plate 102 and the rear surround plate 103 are arranged in the front part and the rear part of the battery pack case, respectively, and are lapped with the side surround plate 104, respectively, the front surround plate 102 and the rear surround plate 103 do not exceed the end surface of the side surround plate 104, so that when the front part or the rear part of the battery pack is hit by an external object, it is preferred to make the end surface of the side surround plate 104 hit with the external object, and utilize the side surround plate 104 to provide protection for the front surround plate 102 and the rear surround plate 103.

Referring to FIG. 12, in some embodiments, a fixed module structure 106 is provided inside the first cavity 108, and the fixed module structure 106 and the surround plate are unibody, or the fixed module structure 106 is welded or riveted to the surround plate. In this embodiment, the fixed module structure 106 is used to fix the battery set 109, and by integrating the fixed module structure 106 with the surround plate, the welding area of the box body is reduced, the production process of the box body is simplified, and the weight of the box body is further reduced.

Referring to FIG. 13, in some embodiments, a reinforcing crossbeam 107 is set inside the first cavity 108, the reinforcing crossbeam 107 and the surround plate are unibody, or the reinforcing crossbeam 107 is welded or riveted to the surround plate. In this embodiment, the reinforcing crossbeam 107 is used to further improve the strength of the box body, and by integrating the reinforcing crossbeam 107 with the surround plate, the welding area of the box body is reduced, the production process of the box body is simplified, and the weight of the box body is further reduced.

Referring to FIG. 8, in some embodiments, the front surround plate 102 is provided with at least one insertion hole 1021 and at least one water nozzle 1022. In this embodiment, by providing the insertion hole 1021 and the water nozzle 1022 on the front surround plate 102, a mounting and fixing position is provided for the interface of the battery pack with the outside for information exchange and energy delivery.

Referring to FIG. 14, it is preferred that the surround plate of the box body and the perimeter of the bottom plate 101 are made integrally by welding or structural adhesive bonding, so that the bottom plate 101 and the surround plate are firmly connected to avoid falling apart when subjected to an external force, and the surround plates of the box body are lapped together in one and presented as a corner, and the module can be arranged within this corner, which improves the utilization of space within the box body.

It is further noted that the first direction D1, the second direction D2 and the height direction of the battery pack case are perpendicular to each other in the present disclosure.

The present disclosure adopts a thin plate structure for the surround plate structure of the box body, which reduces the weight of the box body, reduces the use of materials, and lowers the cost of the box body, and by designing multiple protrusions on the side surround plate of the box body, the strength of the side surround plate is increased to prevent deformation of the side surround plate.

Currently, multiple modules are arranged in the battery pack, the module fixing beam structure is designed in the battery pack, and the modules are fixed to the module beam structure of the battery pack case by bolts, and in order to make the connection between the module crossbeam and the case body reliable, a welding method is used to weld the module crossbeam in the battery pack case. However, in the related technology, after the module is welded, the weld seam between the module crossbeam and the case body will have excessive protrusion and large welding point. The thick weld seams are prone to interfere with the battery cell within the module, causing failure of the insulating layer of the battery cell. Even if the battery cell does not interfere with the weld seam during the assembly process, the battery cell will expand after the charging and discharging cycles, there is still a risk of interfering between the weld seam and the battery cell, which makes the module in the battery pack a safety hazard of short-circuit.

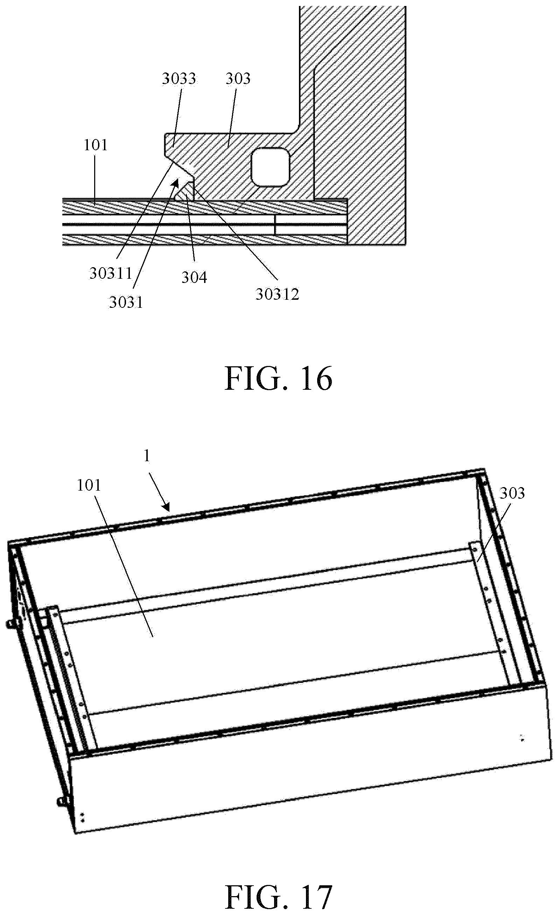

To address the risk of the weld seam interfering with the battery cell of the battery set in the prior art, as shown from FIG. 16 to FIG. 18, the present disclosure provides at least one module beam 303 in the battery box 1 for mounting the battery set 302, the module beam 303 is welded to the bottom plate 101 of the battery box 1, and a weld seam 304 is formed by welding the connection position between the module beam 303 and the bottom plate 101, the module beam 303 is connected to the battery set 302, and a connection position between the module beam 303 and the bottom plate 101 is provided with an accommodation section for accommodating the weld seam 304. It is to be noted that the bottom plate 101 of the battery box 1 in this embodiment is of the same structure as the bottom plate 101 of the battery box 1 of the previously described embodiment, but this is not to be used as a limitation that other components must be the same in different embodiments. The battery set 302 in this embodiment may be the same or different from the battery set 109 in the previously described embodiment.

Specifically, the accommodation section comprises at least one groove 3031 setting on the module beam 303, and the weld seam 304 located within the groove 3031.

It can be understood that the module beam 303 of the present disclosure is provided with the groove 3031, and the weld seam 304 is internalized in the groove 3031 for avoiding the problem of interference between the battery cell in the battery set 302 and the weld seam 304, and circumventing the safety problem of a short-circuiting fire of the battery set 302 in the battery pack. Further, the present disclosure adopts the groove 3031 as the accommodation section, which does not occupy the internal space of the battery box 1.

Preferably, as shown in FIG. 16 and FIG. 17, the accommodation section comprises at least one groove 3031 setting on the side of the module beam 303, the groove 3031 is set along a length direction of the module beam 303 so as to enable the module beam 303 to form a sheltering part 3033 for sheltering the weld seam 304.

It is noted that the depth of the inward depression of the groove 3031 is greater than or equal to the width of the weld seam 304 to allow the weld seam 304 to be concealed in the groove 3031.

Specifically, the groove 3031 comprises a first inner wall surface 30311 and a second inner wall surface 30312, one side of the second inner wall surface 30312 is connected to the bottom plate 101 of the battery box 1 and another side is connected to the first inner wall surface 30311. After the first inner wall surface 30311 and the second inner wall surface 30312 are connected, the angle between the first inner wall surface 30311 and the second inner wall surface 30312 is a non-acute angle.

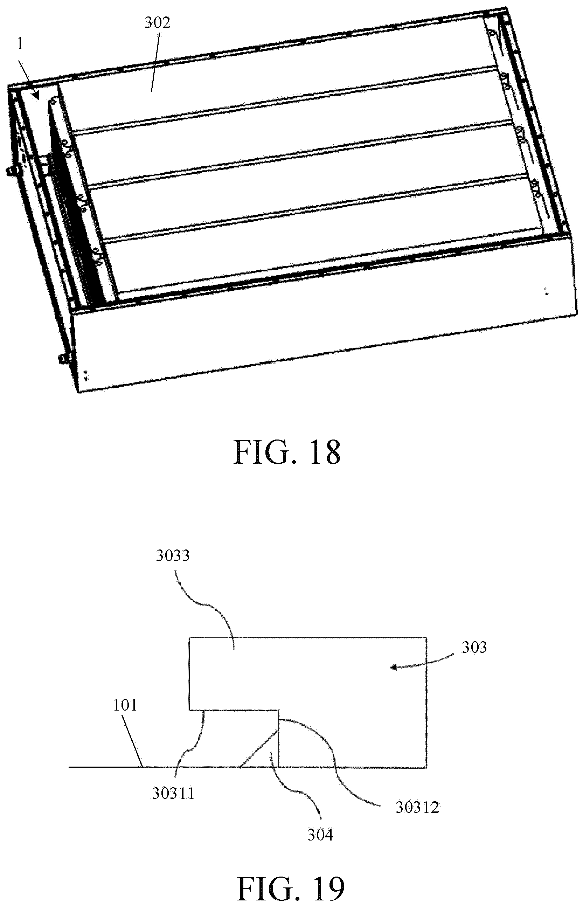

In an optional embodiment of the present disclosure, as shown in FIG. 19, the first inner wall surface 30311 is arranged parallel to the bottom plate 101, the second inner wall surface 30312 is arranged perpendicular to the bottom plate 101, and the angle between the first inner wall surface 30311 and the second inner wall surface 30312 is 90 degrees.

It should be noted that in the embodiment where the first inner wall surface 30311 is provided in parallel with the bottom plate 101, since the weld seam 304 is located at the bottom plate 101 (i.e., the welding point is also located at the bottom plate 101), the sheltering part 3033 can interfere with the welding device and cause difficulties for the assemblers in their welding work.

Preferably, in order to solve the above problem, as shown in FIG. 16, in this embodiment, the first inner wall surface 30311 is not arranged in parallel with the bottom plate 101, the second inner wall surface 30312 is perpendicular to the bottom plate 101, and the angle between the first inner wall surface 30311 and the second inner wall surface 30312 is an obtuse angle. In this way, the first inner wall surface 30311 extends obliquely upwards relative to the bottom plate 101, and the cross-sectional area of the opening of the groove 3031 is larger than the cross-sectional area of the second inner wall surface 30312, which provides the channel for the welding device to reach through and reduces the difficulty of the production process.

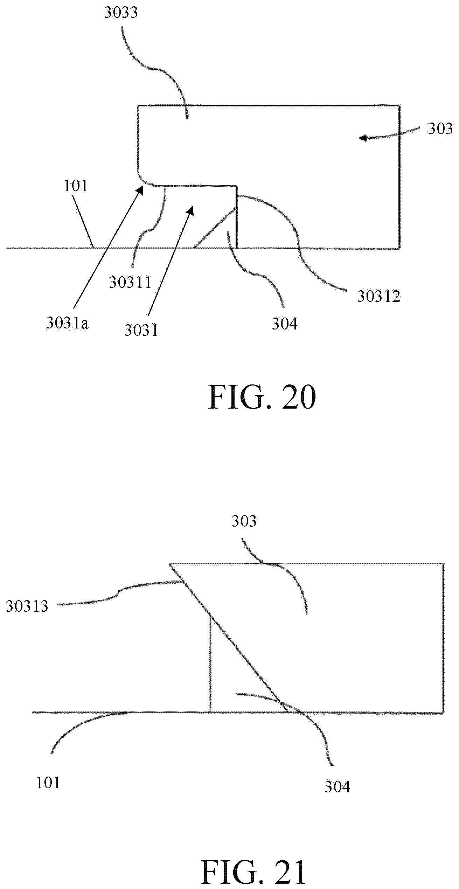

In another embodiment provided in the present disclosure, as shown in FIG. 20, the first inner wall surface 30311 is arranged parallel to the bottom plate 101, the second inner wall surface 30312 is arranged perpendicular to the bottom plate 101, and the angle between the first inner wall surface 30311 and the second inner wall surface 30312 is 90 degrees. Meanwhile, the opening edge 3031a of the groove 3031 is in a circular arc shape.

It should be noted that the embodiment shown in FIG. 20 is an improvement of the embodiment shown in FIG. 19. The opening edge 3031a of the groove 3031 has a circular arc shape, which facilitates welding and to some extent avoids bumping with other components at the opening edge 3031a.

In another embodiment provided by the present disclosure, as shown in FIG. 21, the groove 3031 comprises an inner plane 30313, one side of the inner plane 30313 is connected to the bottom plate 101 and another side serves as an opening edge of the groove 3031, and the angle between the inner plane 30313 and the bottom plate 101 is an acute angle. It is to be understood that in this embodiment, the groove 3031 is an inner plane 30313 inclined with respect to the bottom plate 101. The angle between the inner plane 30313 and the bottom plate 101 is an acute angle, and the groove 3031 is a concave structure with a large opening and a small bottom, so as to facilitate the welding device to extend into the groove 3031 to perform welding operations.

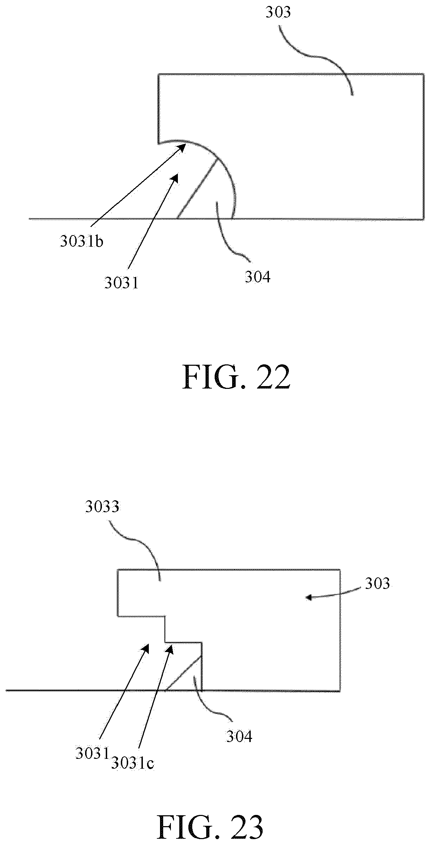

In another embodiment provided by the present disclosure, as shown in FIG. 22, the inner wall surface 3031b of the groove 3031 is a curved surface.

In addition, the present disclosure also provides an embodiment, as shown in FIG. 23, the inner wall surface 3031c of the groove 3031 is in a stepped shape.

In other optional embodiments, the groove 3031 included in the accommodation section is arranged along the length direction of the module beam 303 throughout.

Preferably, the accommodation section comprises at least two grooves 3031, the two grooves 3031 are spaced apart along the length direction of the module beam 303.

It is noted that after the welding is completed and the weld seam 304 is formed, the surface of the weld seam 304 is uneven and has sharp edge, sharp corner, and burr. Since the sheltering part 3033 is provided above the weld seam 304, the surface of the expanded battery cell is blocked by the sheltering part 3033 above the weld seam 304, which avoids potential interference (where the surface of the expanded battery cell enters directly into the notch of the hidden groove 3031) between the battery cell in the module and the weld seam 304 or direct interference between the battery set 302 and the sharp edge, sharp corner, and burr of the weld seam 304 during the assembly and mounting of the battery box.

Further, the battery box 1 comprises at least two module beams 303, the two module beams 303 are spaced apart in the cavity of the battery box 1. And the two module beams 303 are symmetrically arranged in the cavity of the battery box 1, each module beam 303 is affixed to the battery box 1. The top surface of the module beams 303 is provided with bolt holes for fixing the battery set 302, and multiple battery sets 302 are mounted on the two module beams 303.

In an optional embodiment, the battery box 1 comprises at least three module beams 303, the three module beams 303 are spaced apart in the battery box 1. It will be appreciated that the number of the module beam 303 may be adjusted according to the number of the battery set 302 and mounting requirements.

In other optional embodiments, the battery box 1 comprises at least four module beams 303, the four module beams 303 are arranged symmetrically or successively in the battery box 1.

In summary, the present disclosure provides the accommodation section on the battery pack case to isolate the weld seam from the battery set, so as to avoid the battery set from interfering with the weld seam during assembly and mounting, or, the battery cell of the battery set expanding and touching with the weld seam after charging and discharging cycles, which will cause the short circuit of the module inside the battery box. Further, the accommodation section of the present disclosure is provided as a groove, so as to solve the safety hazard of short circuit of the module in the battery box without occupying the internal space of the battery box.

At present, the typical energy storage system is containerized energy storage battery system, which is mainly composed of container box, battery rack, and battery box mounted on the battery rack, etc., in which the battery box is slid into the battery rack by means of the slide rails on both sides that fit into the cluster racks on the battery rack. For the battery box with large weight, only relying on the cluster rack and the mounting guide part on both sides of the battery box cannot well support the battery box, and when the battery box is fitted to the cluster rack by means of the slide rail, the cluster rack mainly limits the battery box in the upward direction and the downward direction of the battery rack, if the gap between the cluster rack and the side surface of the battery box is large, the battery box faces the risk of swaying left and right in the horizontal direction.

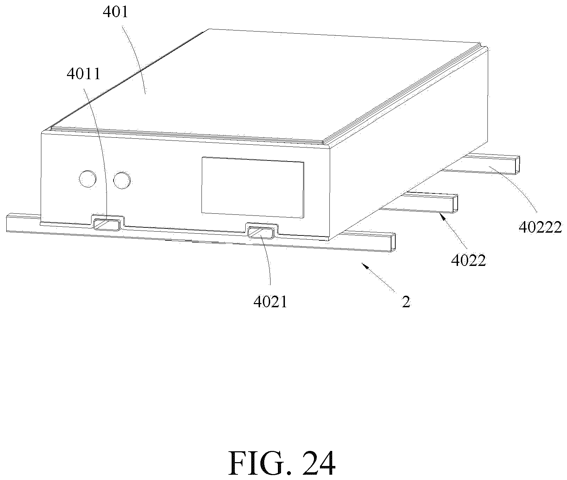

As shown in FIG. 24, the battery cabinet of the present disclosure comprises a battery rack, the battery rack comprises the mounting bracket 2, and the mounting bracket 2 is provided with the guide rail 4021. The battery pack 401 comprises the battery box 1, and the box body of the battery box 1 is provided with the guide groove 4011 recessed along the longitudinal direction toward the interior of the box body, and the battery pack 401 is slidably connected to the guide rail 4021 by the guide groove 4011.

As shown in FIG. 24, the mounting bracket 2 further comprises the carrying bracket 4022, the guide rail 4021 is fixed to the carrying bracket 4022, the guide groove 4011 is formed by the bottom surface of the box body concave inside the box body, the carrying bracket 4022 comprises support rod 40222 provided horizontally and standing rod provided vertically, the support rods 40222 are extended along the transverse direction, and a plurality of the support rods 40222 are arranged in spaced apart along the longitudinal direction, the guide rail 4021 is fixed to the top of the multiple support rods 40222, the battery pack 401 is slidably connected to the guide rail 4021 by the guide groove 4011 of the box body, and the support rods 40222 are provided with standing rods at both ends.

That is, the guide rail 4021 connects multiple support rods 40222 into a single unit, thereby ensuring the overall stability of the mounting bracket 2, and when the battery pack 401 is pressed on the support rods 40222, the guide rail 4021 correspondingly extends into the guide groove 4011 on the bottom surface of the case body of the battery pack 401, thereby the battery pack 401 can be stably supported and the battery pack 401 can be slid to the preset position along the guide rail 4021 conveniently, so there is no need to set an additional fitting structure on the case body of the battery pack 401 to realize the connection with the guide rail 4021 and reduce the space occupied by the single battery pack 401 on the mounting bracket 2, and at the same time, the guide rail 4021 and the carrying bracket 4022 jointly support the battery pack 401, and the guide rail 4021 is configured within the guide groove 4011 in the case body of the battery pack 401 to limit the position of the battery pack 401 in the left and right directions.

Preferably, a plurality of guide grooves 4011 are provided at transverse intervals along the bottom surface of the case body of the battery pack 401, a plurality of guide rails 4021 are provided at transverse intervals along the top surface of the support rod 40222, and the battery pack 401 is slidably connected to the multiple guide rails 4021 in one-to-one correspondence through the multiple guide grooves 4011 of the case body.

Preferably, the number of the guide grooves 4011 and the guide rails 4021 are two each, as shown in FIG. 24.

By providing a plurality of guide grooves 4011 on the bottom surface of the battery pack 401, and interval setting a plurality of guide rails 4021 at the top of the support rod 40222, the multiple guide rails 4021 enter into the multiple guide grooves 4011 in one-to-one correspondence, and the position limiting of the battery pack 401 in the horizontal direction can be further improved to further strengthen the solidity of the position of the battery pack 401.

In order to solve the low efficiency of battery replacement in an energy storage container in the prior art, and in order to reduce the transportation cost and storage cost of battery, the present disclosure also provides an energy storage container, by adding the compartment for the backup battery reserve within the box body of the energy storage container that reduces the overall cost of replacing the battery in the battery compartment. The energy storage container comprises a box body and the battery cabinet as described previously, the battery cabinet is provided in the box body for fixing the battery pack.

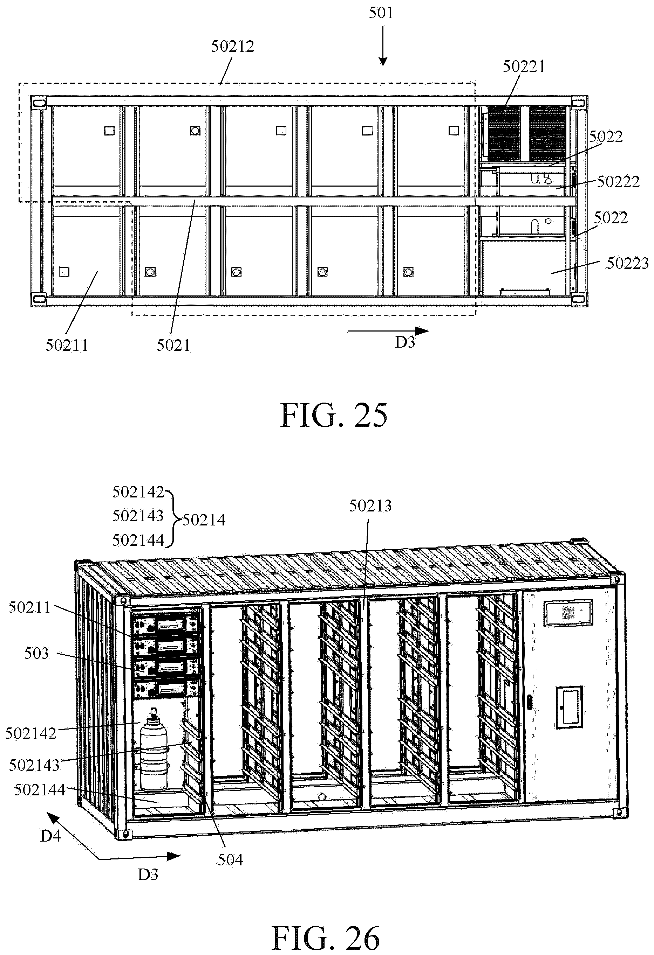

As shown in FIG. 25, the energy storage container comprises the container body 501, the container body 501 has a first mounting zone and a second mounting zone arranged side by side along the third direction D3. In FIG. 25, the first mounting zone is located on the left and the second mounting zone is located on the right. Specifically, the battery rack in the battery cabinet described hereinbefore further comprises the first partition structure 5021 and the second partition structure 5022, the first partition structure 5021 is arranged in the interior of the first mounting zone and separates the first mounting zone into the battery compartment 50212 and the preparation compartment 50211, the second partition structure 5022 is arranged in the interior of the second mounting zone and separates the second mounting zone into multiple functional compartments, the battery compartment 50212 is provided between the preparation compartment 50211 and the second mounting zone. As shown in FIG. 26, a plurality of battery packs 503, including battery boxes, are arranged within the battery compartment 50212 and the preparation compartment 50211.

It is to be noted that the third direction D3 is equivalent to the Y direction in FIG. 1 and the second direction D2 shown in FIG. 8. A fourth direction D4 is also shown in FIG. 26, and the fourth direction D4 is perpendicular to the third direction D3. When mounting the battery pack 503, the battery pack 503 is slid inwardly into the container body 501 along the fourth direction D4. The fourth direction D4 corresponds to the X direction in FIG. 1 and the first direction D1 in FIG. 8.

The interior of the preparation compartment 50211 of the energy storage container is used for placing the spare battery pack 503, and when the battery in the battery compartment 50212 needs to be replaced due to the malfunction or other reasons, at this time, the spare battery pack 503 located in the preparation compartment 50211 can be taken out and the battery pack 503 that needs to be replaced in the battery compartment 50212 can be replaced. Due to the preparation compartment 50211 is provided adjacent to the battery compartment 50212, the transportation time of the battery pack 503 can be saved and the battery pack 503 can be replaced in time; and the preparation compartment 50211 is provided in the container body 501 of the energy storage container, so that it is not necessary to build a preparation warehouse around the periphery of the energy storage container, which saves construction costs.

The preparation compartment 50211 is not limited to holding spare battery pack 503, but may also hold auxiliary components such as the fire bottle, such as a fire bottle illustrated in FIG. 26.

In this embodiment, the battery compartment 50212 and the preparation compartment 50211 are both provided in the interior of the first mounting zone to achieve the effect that the preparation compartment 50211 is adjacent to the battery compartment 50212, which in turn facilitates the replacement of the battery packs 503, and at the same time facilitates the monitoring of the battery packs 503 in the interior of the battery compartment 50212 by the preparation compartment 50211.

As shown in FIG. 26, the first partition structure 5021 comprises the first cluster rack 50213, the second cluster rack 504, and the partition assembly 50214, the first cluster rack 50213 and the second cluster rack 504 stand in the interior of the first mounting zone, the first cluster rack 50213 and the second cluster rack 504 are used for mounting the battery pack 503, and the partition assembly 50214 is provided on the first cluster rack 50213, the second cluster rack 504, and the container body 501, the partition assembly 50214 encloses the preparation compartment 50211, the preparation compartment 50211 and the battery compartment 50212 are spaced apart by the partition assembly 50214.

It is to be noted that the first cluster rack 50213 and the second cluster rack 504 are similar to the mounting bracket 2 in the embodiment shown in FIG. 1, the first cluster rack 50213 and the second cluster rack 504 are respectively provided with the structure similar to that of the cluster rack 3 in FIG. 1 for setting the battery box 1 or the battery pack 503. The embodiment shown in FIG. 26 is characterized in that the first cluster rack 50213 and the second cluster rack 504 are provided in the energy storage container, and that the second cluster rack 504 is movably provided within the energy storage container, as will be described later.

Specifically, the first cluster rack 50213 and the second cluster rack 504 mount and fix the battery pack 503 arranged within the battery compartment 50212 and the preparation compartment 50211, which can enable the battery pack 503 to be stably arranged within the battery compartment 50212 and the preparation compartment 50211 to enhance the stability of the mounting of the battery pack 503.

Further, the first cluster racks 50213 are provided in a plurality, the multiple first cluster racks 50213 are spaced apart along the third direction D3, and the mounting zone of the battery pack 503 is formed between two adjacent first cluster racks 50213, so that the battery pack 503 can be mounted along the height direction of the container body 501.

Further, along the third direction D3, the second cluster rack 504 is provided on one side of the first cluster rack 50213 away from the second mounting zone, i.e., as viewed from the perspective shown in FIG. 26, the second cluster rack 504 is provided to the left side of the first cluster rack 50213, and the second mounting zone is located on the right side of the first cluster rack 50213.

In this embodiment, a portion of the partition assembly 50214 is provided on a wall surface of the container body 501, a portion of the partition assembly 50214 is provided on the first cluster rack 50213, and a portion of the partition assembly 50214 is provided on the second cluster rack 504, the partition assembly 50214 encloses one preparation compartment 50211 that is provided in isolation from the battery compartment 50212, thereby realizing the protection of the material preparation inside the preparation compartment 50211.

As shown in FIG. 25 and FIG. 26, the partition assembly 50214 comprises the back partition 502142, one set of oppositely arranged side partitions 502143, and the bottom partition 502144. The back partition 502142, the side partitions 502143, and the bottom partition 502144 cooperating to enclose the preparation compartment 50211 with an opening structure, the bottom partition 502144 is arranged on a bottom end of the second cluster rack 504, one of the side partitions 502143 is provided on the first cluster rack 50213, the other side partition 502143 is provided on the container body 501, and the back partition 502142 is provided on the first cluster rack 50213.

The battery compartment 50212 and the preparation compartment 50211 are separated by the partition assembly 50214, so that the battery compartment 50212 and the preparation compartment 50211 are in two relatively independent spaces, and when an accident (such as a fire, etc.) occurs to the battery in the battery compartment 50212, due to the existence of the partition assembly 50214, the accident in the battery compartment 50212 will not spread to the preparation compartment 50211, and the battery pack 503 of the preparation compartment 50211 is protected.

Further, the back partition 502142, the side partition 502143, and the bottom partition 502144 are all hollow structures, and the energy storage container further comprises the thermal insulation material filling the interior of the hollow structures of the back partition 502142, the side partition 502143, and the bottom partition 502144.

By filling the hollow interior of the back partition 502142, the side partition 502143, and the bottom partition 502144 with thermal insulation material, it is possible to further improve the protective effect of the partition assembly 50214 on the battery pack 503 in the preparation compartment 50211, and reduce the hazards caused by the external environment to the battery pack 503 in the preparation compartment 50211, and further protect the battery pack 503 in the preparation compartment 50211.

In this embodiment, the first cluster rack 50213 is fixedly connected to the container body 501, and the battery pack 503 is slidably arranged on the first cluster rack 50213 so as to be pulled out when the battery pack needs to be replaced.

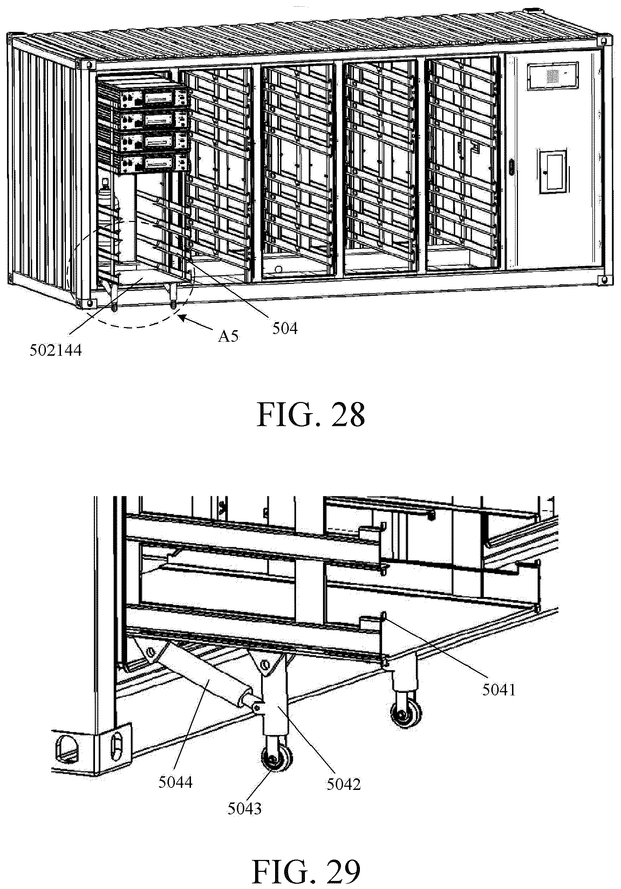

As shown in FIG. 28, the second cluster rack 504 is in a state of being partially pulled out. The second cluster rack 504 is movably provided in the interior of the preparation compartment 50211, the battery pack 503 is provided on the second cluster rack 504, the second cluster rack 504 is independently provided in the interior of the preparation compartment 50211 and can be pulled out, so that the second cluster rack 504 can be pulled out by applying an external force when needed, and the second cluster rack 504 may be moved out to the exterior of the container body 501. Wherein, the bottom partition 502144 is provided at a bottom end of the second cluster rack 504, and the bottom partition 502144 is capable of following the second cluster rack 504.

By providing the second cluster rack 504, it is possible to conveniently place the battery pack 503 and other preparation materials, and due to the second cluster rack 504 that is movably provided in the interior of the preparation compartment 50211, it is possible to conveniently replace the battery pack 503 by moving the second cluster rack 504.

It should be noted that when the preparation material other than the battery pack 503 is placed inside the preparation compartment 50211, the preparation material may also be placed on the second cluster rack 504.

As shown in FIG. 29, the second cluster rack 504 comprises the rack body 5041, the support rod 5042, the moving wheel 5043, and the driving member 5044, one end of the support rod 5042 is hinged joint to the bottom of the rack body 5041; the other end of the support rod 5042 is provided with the moving wheel 5043; the driving member 5044 is provided between the rack body 50541 and the support rod 5042, and the driving member 5044 is connected to the support rod 5042, the driving member 5044 provides a driving force for the support rod 5042 to be folded or unfolded on the rack body 5041.

Specifically, the moving wheel 5043 provided at the bottom end of the second cluster rack 504 can facilitate movement of the second cluster rack 504, thereby facilitating movement of the battery pack 503 located on the second cluster rack 504, and can quickly mount the battery pack 503 into the interior of the preparation compartment 50211 by pulling, thereby improving the mounting efficiency.

Further, the support rod 5042 is hinged joint to the bottom of the rack body 5041 and is driven to rotate by the driving member 5044. One end of the driving member 5044 is hinged joint to the rack body 5041, and the other end is hinged joint to one end of the support rod 5042 near the moving wheel 5043. When the support rod 5042 is completely unfolded, the support rod 5042 is in a vertical state, and the moving wheel 5043 is touching the ground, which is convenient for moving the second cluster rack 504; when the support rod 5042 is in a folded state, the angle between the support rod 5042 and the rack body 5041 is a smaller acute angle, which may be able to reduce the overall height of the second cluster rack 504 and convenient for placing the second cluster rack 504 inside the battery compartment 50212 or the preparation compartment 50211. The support rod 5042 is driven to rotate by the driving member 5044, the driving member 5044 may be an electric actuator or one of the pneumatic cylinder and the hydraulic cylinder, etc. The advantage is that it has a certain self-locking function, so that when the support rod 5042 is fully unfolded in the vertical state, it can make the vertical state of the support rod 5042 remain stable, so as to enable the second cluster rack 504 to move stably.

In this embodiment, the second partition structure 5022 comprises the partition plate, the partition plates are provided in a plurality and spaced apart along the height direction of the container body 501, multiple partition plates separates the second mounting zone into a plurality of functional compartments spaced apart along the height direction of the container body 501, as shown in FIG. 25, the functional compartments comprise at least the electrical compartment 50222, the liquid-cooling compartment 50221, and the fire compartment 50223.

Wherein the multiple functional compartments play an auxiliary role, and enable the use of different functional compartments according to the needs of the battery compartment 50212 to maintain the stable operation of the battery compartment 50212.

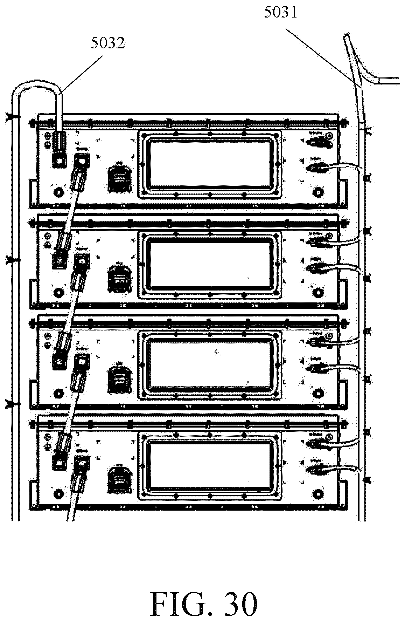

As shown in FIG. 30, in this embodiment, the energy storage container further comprises the low-voltage wiring harness 5031 and the high-voltage wiring harness 5032, and the battery cells in the battery compartment 50212 and the preparation compartment 50211 are electrically connected via the low-voltage wiring harness 5031 and the high-voltage wiring harness 5032. By the electrical connection of the low-voltage wiring harness 5031 and the high-voltage wiring harness 5032, the charging state of the battery pack 503 in the preparation compartment 50211 can be monitored, the battery pack 503 would be charged if the power of the battery pack 503 drops to a certain range, so as to ensure that the battery pack 503 in the preparation compartment 50211 is always in a normal state of charge.

From the above description, it can be seen that the above embodiments of the present disclosure involving energy storage containers realize the following technical effects:
1. The spare battery pack 503 adapted to the energy storage container is placed in the preparation compartment 50211, when the battery in the battery compartment 50212 needs to be replaced due to malfunction or other reasons, the spare battery pack 503 located in the preparation compartment 50211 can be taken out, and the battery that needs to be replaced in the battery compartment 50212 can be replaced. Due to the preparation compartment 50211 that is provided adjacent to the battery compartment 50212, the transportation time of the battery pack 503 can be saved, and the battery pack 503 can be replaced in time; and the preparation compartment 50211 is provided in the container body 501 of the energy storage container, so that it is not necessary to build the preparation warehouse around the periphery of the energy storage container, which saves the construction costs.
2. Due to the presence of the partition assembly 50214, the accidents in the battery compartment 50212 will not spread to the preparation compartment 50211 which protects the battery pack 503 in the preparation compartment 50211.
3. By the electrical connection of the low-voltage wiring harness 5031 and the high-voltage wiring harness 5032, the state of charge of the battery pack 503 in the preparation compartment 50211 can be monitored, the battery pack 503 would be charged if the power of the battery pack 503 drops to a certain range, so as to ensure that the battery pack 503 in the preparation compartment 50211 is always in a normal state of charge.

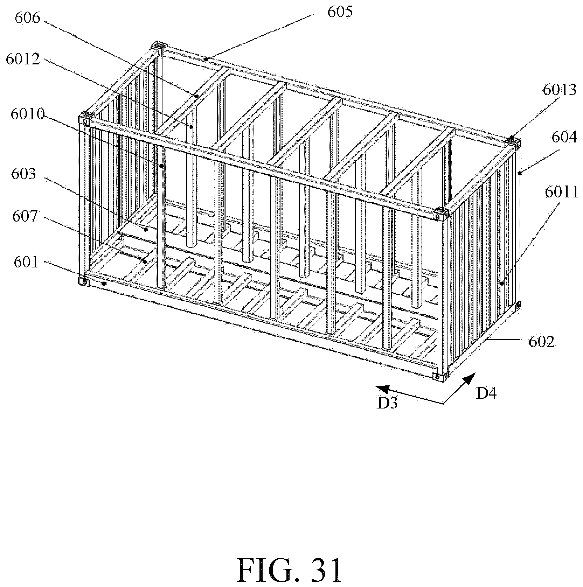

For some of the current energy storage containers, the overall strength is not enough to meet the requirements of the battery packs, the busbar cabinets, and the air conditioners, etc. assembled together and then transported for shipment, so that in the process of transportation, the cost of transportation is increased, and at the same time, the assembly of the battery packs, the busbar cabinets, and the air conditioners in the project site will be subjected to the weather and the environment, which will affect the progress of the project. In response to the problem, the present disclosure provides a container body of the energy storage container, which is also referred to as an energy storage container frame, as shown from FIG. 31 to FIG. 33, the energy storage container frame comprises the frame body and the steel longitudinal beam 603, the frame body is rectangular in shape; the height of the steel longitudinal beam 603 is higher than a short side of the bottom of the frame body, and a lower end of the end of the steel longitudinal beam 603 is connected to the short side of the frame body, the upper ends of both ends of the steel longitudinal beam 603 are connected to the lap beam 608, and both ends of the lap beam 608 are connected to the columns of the frame body. Both ends of the steel longitudinal beam 603 are provided with the lap beam 608, the lap beam 608 makes the position of the steel longitudinal beam 603 at the bottom of the frame body more stable and strengthens the strength of the connection between the steel longitudinal beam 603 and the two end surfaces of the frame body, which makes the steel longitudinal beam 603 less susceptible to displacement and deformation, and increases the load-bearing limit of the energy storage container to avoid deformation and cracking during transportation and lifting of the energy storage container after mounting the battery packs and other electrical components.

Referring to FIG. 31, the third direction D3 is defined as the length direction, and the fourth direction D4 is defined as the width direction. The extension directions of the third direction D3 and the fourth direction D4 herein are the same as the extension directions of the third direction D3 and the fourth direction D4, respectively, in the embodiment shown in FIG. 26.

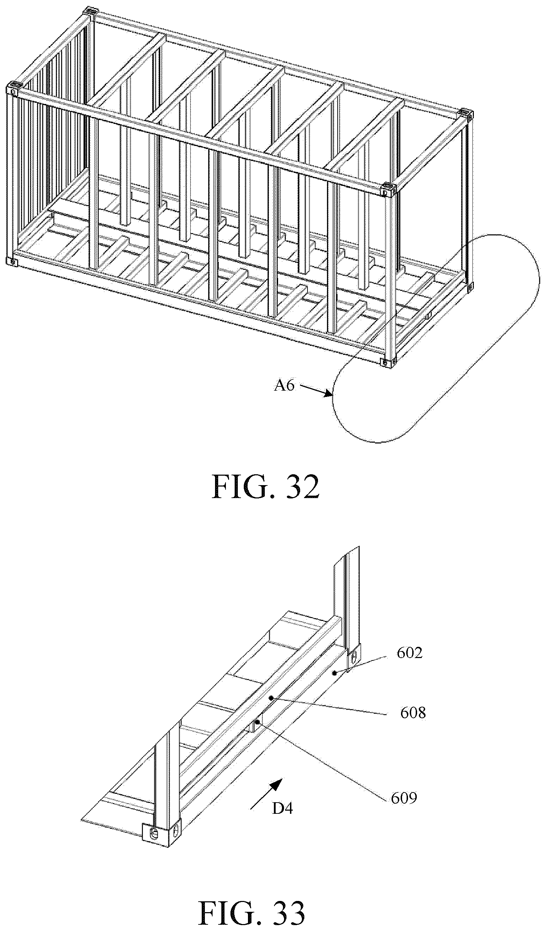

It is to be noted that the frame body shown in FIG. 31 may be used as the frame body of the container body 501 in the embodiment shown in FIG. 25, and the relevant descriptive content may be used to illustrate the container body 501. In order to show the lap beams 608, the end closure plate 6011 on the right side of the frame body is not shown in FIG. 32, and FIG. 33 is a partially enlarged view of the region A6 in FIG. 32.

As an optional embodiment method, as shown in FIG. 33, the width of the lap beam 608 in the fourth direction D4 is less than the width of the short side of the frame body, so that the lap beam 608 and the short side of the frame body are staggered horizontally to form a difference in distance, i.e., the lap beam 608 does not protrude out of one side of the short side of the frame body, so that the lap beam 608 does not interfere with the mounting of other components, so as to facilitate the subsequent assembly of the components.

As an optional embodiment method, as shown from FIG. 31 to FIG. 34, both ends of the frame body are provided with end closure plates 6011, the end closure plates 6011 are perpendicular to the bottom surface of the frame body and the end closure plates 6011 are arranged on the outside of the lap beam 608. The end closure plate 6011 is arranged on the short side of the frame body so that the end closure plate 6011 can not only hide the lap beam 608 and the lap block 609 inside the energy storage container without exposing to the outside, but also make the end closure plate 6011 not to protrude from the end surface of the energy storage container frame in a horizontal direction to ensure that the energy storage container has a beautiful appearance.

As an optional embodiment method, as shown from FIG. 31 to FIG. 33, a lap block 609 is provided between the lap beam 608 and the short side of the frame body, and the lap block 609 is provided in the middle of one side of the steel longitudinal beam 603. The lap block 609 is arranged between the lap beam 608 and the short side of the frame body for supporting the lap beam 608, so that the lap beam 608 does not fall down, ensuring that the energy storage container frame does not suffer from a decrease in end load-bearing capacity.

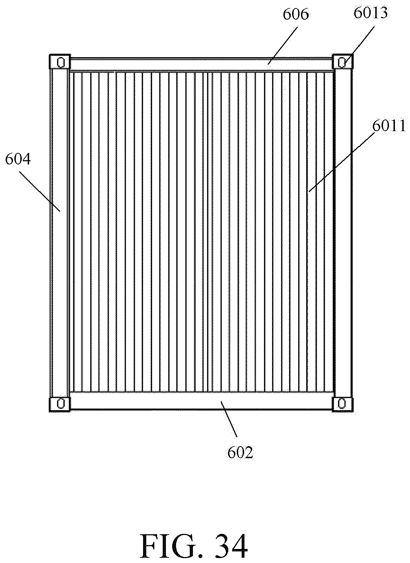

As an optional embodiment method, as shown in FIG. 34, each corner of the frame body is provided with the corner fitting 6013. The corner fitting 6013 strengthens the strength of the corner joint position of the energy storage container frame while also providing protection for the corner joint position of the energy storage container frame, reducing the degree of wear and tear of the energy storage container frame during transportation.

As an optional embodiment method, the steel longitudinal beam 603 is an H-beam or an I-beam. The following is an example of the H-beam, the lap beam 608 and the short side of the frame body are connected to two parallel sides of the H-beam, respectively, and the lap block 609 is connected to the vertical side of the H-beam while connecting the lap beam 8 and the short side of the frame body. The steel longitudinal beam 603 strengthens the connection strength of the overall structure of the energy storage container frame by using the structure of the 60H-beam to connect the lap beam 608, the lap block 609 and the frame body together.

As an optional embodiment method, referring to FIG. 31, the frame body comprises a bottom frame, an end part and a top frame; the bottom frame comprises two first longitudinal beams 601 set parallel to each other and two first crossbeams 602 set parallel to each other and located at both ends, the distances between the steel longitudinal beam 603 and two first longitudinal beams 601 are the same; the end part comprises a plurality of first columns 604, and the first column 604 is vertically upwardly set at a junction of the first longitudinal beam 601 and the first crossbeam 602; the top frame comprises two second longitudinal beams 605 set in parallel, the second longitudinal beams 605 are set opposite to the first longitudinal beams 601, and a plurality of second crossbeams 606 are set between two second longitudinal beams 605, and the second crossbeams 606 are set perpendicularly to the second longitudinal beams 605. The bottom frame, the end part, and the top frame form the basic structure of the energy storage container frame, and are the load-bearing structure for the overall assembly of the transportation and lifting operations, wherein the second crossbeams 606 are used to reinforce the top frame of the energy storage container frame to prevent the top frame of the energy storage container frame from deforming during transportation.

As an optional embodiment method, referring to FIG. 31, a plurality of third crossbeams 607 are provided at the same spacing between the first longitudinal beam 601 and the steel longitudinal beam 603, and the third crossbeams 607 are parallel to the first crossbeam 602. One end of the third crossbeam 607 is connected to one first longitudinal beam 601, and another end is connected to the other one first longitudinal beam 601, which allows the steel longitudinal beams 603 to be more securely fixed on the bottom frame of the frame body, and also increases the strength of the bottom frame and the load-bearing limit of the bottom frame, and reduces the probability of cracking and deformation of the bottom frame.

As an optional embodiment method, referring to FIG. 31, the first longitudinal beam 601 is provided with a plurality of second columns 6010, and the second columns 6010 are parallel to the first columns 604. One end of the second column 6010 is connected to the first longitudinal beam 601, and another end of the second column 6010 is connected to the second longitudinal beam 605, and at the same time, the second columns 6010 are parallel to the first column 604, which strengthens the upper limit of the load bearing capacity of the side wall of the energy storage container frame, and makes the side wall of the energy storage container frame more solid and stable.

As an optional embodiment method, the steel longitudinal beam 603 is H-beam, and the height of the steel longitudinal beam 603 is higher than that of the first crossbeam 602, and third columns 6012 are vertically provided between the steel longitudinal beam 603 and each second crossbeam 606, and the third columns 6012 can support the top frame of the energy storage container frame, which strengthens the load-bearing capacity of the top frame and reduces the risk of the top frame deformation.

The assembly method of the energy storage container frame is specified here: when welding and assembling the energy storage container frame, firstly, welding the bottom frame of the frame body, and welding the first longitudinal beam 601 and the first crossbeam 602 together first to enclosing the bottom frame of the basic framework, and then welding the steel longitudinal beam 603 between the two first crossbeams 602, the height of the steel longitudinal beam 603 should be higher than the heights of the first longitudinal beams 601 and the first crossbeams 602, then welding the lap blocks 609 at the raised position at both ends of the steel longitudinal beams 603, and then welding a plurality of third crossbeams 607 between the steel longitudinal beam 603 and the first longitudinal beams 601, so as to complete the connection of the bottom frame of the energy storage container frame. Then, welding one first column 604 to the four corners of the bottom frame of the energy storage container frame in a vertical upward direction, and the four first columns 604 form the end part of the energy storage container frame, and then welding the lap beam 608 to both ends of the top part of the steel longitudinal beam 603, and both ends of the lap beam 608 are connected to the first columns 604; due to the width of the lap beam 608 is smaller than the first crossbeam 602 so that the space is reserved in the horizontal direction, and welding the end closure plates 6011 to the reserved space at both ends of the energy storage container frame to hide the lap beams 608 and the lap blocks 609 inside. Finally, welding the top frame of the energy storage container frame, first of all, welding the two second longitudinal beams 605 and the two second crossbeams 606 together to form a basic frame structure, and then welding a plurality of second crossbeams 606 at the same intervals in the interior of the frame structure to complete the assembly of the top frame of the energy storage container frame, aligning the top frame of the energy storage container frame with the end part of the welded energy storage container frame for final welding and assembly, after the overall welding and assembly, welding the third columns 6012 between each second crossbeam 606 in the middle of the top frame and the steel longitudinal beam 603, and the third columns 6012 are kept vertically upward; after completing the welding of the third columns 6012, mounting the corner fittings 6013 at each corner joint position of the frame body, so as to complete the welding and assembly of the energy storage container frame.

In the present disclosure, the steel longitudinal beams are added to the bottom frame of the container, and the lap beams are connected with the steel longitudinal beam at the same time, and the lap beams are connected to the frame body, so as to increase the load-bearing limit of the whole container and avoid deformation and cracking problems during transportation and lifting of the whole assembly. The lap joint method of the steel longitudinal beam and the end surface of the crossbeam ensures the overall reliability by making all the closures fully welded with appropriate weight increase. The lap joint method of the steel longitudinal beam and the end surface of the crossbeam can hide the lap joint position inside the corrugated board, which ensures the aesthetic appearance.

Although the present disclosure has been described with reference to the present specific embodiments, the person skilled in the art should realize that the above embodiments are only used to illustrate the present disclosure, and that various equivalent changes or substitutions can be made without departing from the spirit of the present disclosure, therefore, changes and variations to the above embodiments within the spirit and substance of the present disclosure will fall within the scope of the claims of the present disclosure.

## Claims

1. A battery cabinet, wherein comprising:
a battery rack, the battery rack comprises a mounting bracket (2) and a number of mounting zones located within the mounting bracket (2), each mounting zone is provided with a cluster rack (3) on both sides, the cluster rack (3) comprises a side wall (35) and a bottom wall (31) extending along a mounting direction, the cluster rack (3) further comprises an opening end (32) for a battery box (1) to enter;
wherein the battery box (1) is provided with mounting guide parts (11) on both sides of its width direction respectively, two of the mounting guide parts (11) are configured to be slidably mounted on the bottom wall (31) of two of the cluster racks (3) along the mounting direction, the cluster rack (3) is further provided with a first sloping surface (33), an acute angle is arranged between the first sloping surface (33) and the bottom wall (31), and an opening direction of the acute angle towards an entry direction of the battery box (1), the mounting guide part (11) is provided with a first inclined surface (12) for touching and fitting against the first sloping surface (33);
a locking member is also provided between the battery box (1) and the battery rack for pressing the first inclined surface (12) tightly against the first sloping surface (33) along the mounting direction.

2. The battery cabinet according to claim 1, wherein the locking member comprises a stopper (4), the stopper (4) is mounted at the opening end (32) of the cluster rack (3), and the stopper (4) is touching against the battery box (1) in the mounting direction.

3. The battery cabinet according to claim 2, wherein further comprises a plug (5), provided above the mounting guide part (11), the plug (5) is used for pressing and fitting against the mounting guide part (11) in a height direction, the cluster rack (3) is provided with a slot (6) for fitting with the plug (5), the slot (6) is provided with a second sloping surface (61), an acute angle is also arranged between the second sloping surface (61) and the bottom wall (31), and an opening direction of the acute angle also towards an entry direction of the battery box (1), one end of the plug (5) is provided with a second inclined surface (51) for touching and fitting against the second sloping surface (61), and the other end of the plug (5) is used for touching and fitting against the stopper (4).

4. The battery cabinet according to claim 1, wherein the battery box (1) comprises:
a bottom plate (101) and a surround plate;
the surround plate comprises a front surround plate (102) of a thin plate structure arranged opposite to a rear surround plate (103) of a thin plate structure and two side surround plates (104) of thin plate structures set opposite to each other, each of the side surround plate (104) connects the front surround plate (102) and the rear surround plate (103) and connects around the bottom plate (101) to form a first cavity (108) for accommodating a battery set (109), a wall surface of a side of the side surround plate (104) facing away from the first cavity (108) is provided with multiple protrusions (1041) extending along a first direction;
wherein the first direction is a direction in which the front surround plate (102) pointing towards the rear surround plate (103).

5. The battery cabinet according to claim 4, wherein a lower part of each of the side surround plate (104) is further provided with a reinforcing plate (1052) on a wall surface of a side away from the first cavity (108), the side surround plate (104) and the reinforcing plate (1052) encloses a second cavity (105), the reinforcing plate (1052) is provided with a lifting hole (1051), and the battery box (1) further comprises a top cover (1010); the top cover (1010) is set opposite to the bottom plate (101) and is capped on the surround plate for sealing the first cavity (108);
a top of each of the side surround plate (104) is provided with a sealing part (1042) for connecting with the top cover (1010), the sealing part (1042) is connected to the top of the side surround plate (104) and extends along a thickness direction of the side surround plate (104) to a side departing from the first cavity (108), and a width C3 of the sealing part (1042) is not greater than a width C2 of the second cavity (105).

6. The battery cabinet according to claim 1, wherein further comprises a module beam (303) for mounting a battery set (302), the module beam (303) is welded to a bottom plate (101) of the battery box (1), and a connection between the module beam (303) and the bottom plate (101) is provided with an accommodation section for accommodating a weld seam (304), the accommodation section comprises a groove (3031) provided on a side of the module beam (303), the groove (3031) is set along a length direction of the module beam (303) so as to enable the module beam (303) to form a sheltering part (3033) for sheltering the weld seam (304).

7. The battery cabinet according to claim 6, wherein the groove (3031) comprises a first inner wall surface (30311) and a second inner wall surface (30312), one side of the second inner wall surface (30312) is connected to the first inner wall surface (30311), and an angle between the first inner wall surface (30311) and the second inner wall surface (30312) is a non-acute angle.

8. The battery cabinet according to claim 1, wherein the mounting bracket (2) is provided with a guide rail (4021), the battery box (1) is provided with a guide groove (4011) recessed along its length direction towards the interior of the battery box (1), and the battery box (1) is further configured to be slidably connected to the guide rail (4021) by the guide groove (4011).

9. An energy storage container, wherein comprising:
a container body (501) and a battery cabinet as claimed in any one of claims 1 to 8; wherein
the container body (501) is provided with a first mounting zone and a second mounting zone disposed side by side in a third direction, a battery rack in the battery cabinet comprises a first partition structure (5021) and a second partition structure (5022), the first partition structure (5021) is provided inside the first mounting zone and divides the first mounting zone into a battery compartment (50212) and a preparation compartment (50211), the second partition structure (5022) is provided inside the second mounting zone and divides the second mounting zone into multiple functional compartments, the battery compartment (50212) is provided between the preparation compartment (50211) and the second mounting zone, and the battery box is configured to be provided within the battery compartment (50212) and the preparation compartment (50211).

10. The energy storage container according to claim 9, wherein the first partition structure (5021) comprises:
a first cluster rack (50213) and a second cluster rack (504), the first cluster rack (50213) and the second cluster rack (504) stand inside the first mounting zone, the first cluster rack (50213) and the second cluster rack (504) are used for mounting the battery box;
a partition assembly (214), the partition assembly (214) is provided on the first cluster rack (50213), the second cluster rack (504) and the container body (501), the partition assembly (214) enclosing the preparation compartment (50211), the preparation compartment (50211) and the battery compartment (50212) are spaced apart by the partition assembly (214).

11. The energy storage container according to claim 10, wherein the first cluster rack (50213) is fixedly connected to the container body (501), the battery box (1) is slidably set on the first cluster rack (50213), and the second cluster rack (504) is movably set inside the preparation compartment (50211).

12. The energy storage container according to claim 11, wherein the second cluster rack (504) comprises:
a rack body (5041);
a support rod (5042), one end of the support rod (5042) is hinged joint to a bottom of the rack body (5041);
a moving wheel (5043), provided at the other end of the support rod (5042);
a driving member (5044), provided between the rack body (5041) and the support rod (5042), the driving member (5044) is connected to the support rod (5042), and the driving member (5044) provides a driving force for the support rod (5042) to be folded or unfolded on the rack body (5041).

13. The energy storage container according to claim 9, wherein the container body (501) comprises:
a frame body, the frame body is rectangular in shape;
a steel longitudinal beam (603), a height of the steel longitudinal beam (603) is higher than a short side of a bottom of the frame body, and a lower end of an end of the steel longitudinal beam (603) is connected to the short side of the frame body, the upper ends of both ends of the steel longitudinal beam (603) are connected to a lap beam (608), and both ends of the lap beam (608) are connected to the frame body.

14. The energy storage container according to claim 13, wherein a width of the lap beam (608) is less than a width of a short side of the frame body such that the lap beam (608) is staggered horizontally from the short side of the frame body to form a distance difference.

15. The energy storage container according to claim 14, wherein both ends of the frame body are provided with an end closure plate (6011), the end closure plate (6011) is perpendicular to a bottom surface of the frame body, and the end closure plate (6011) is located on an outside of the lap beam (608), wherein a lap block (609) is provided between the lap beam (608) and the short side of the frame body, and each corner of the frame body is provided with a corner fitting (6013).
